# EUROPEAN PATENT APPLICATION

(11) **EP 4 822 326 A1**
(43) Date of publication of application: **14.10.2026**
(21) Application number: 24927161.0
(22) Date of filing: 24.09.2024
(51) Int. Cl.: G01M 11/00, G01J 11/00, G01M 11/02

(54) **INSPECTION DEVICE AND INSPECTION METHOD**

(30) Priority: 28.02.2024 JP 2024028937
(71) Applicant: Hamamatsu Photonics K.K., Hamamatsu-shi, Shizuoka 435-8558 (JP); Vrije Universiteit Brussel, 1050 Brussel (BE)
(72) Inventor: WATANABE, Koyo, Hamamatsu-shi, Shizuoka 435-8558 (JP); NIIGAKI, Ryu, Hamamatsu-shi, Shizuoka 435-8558 (JP); VERMEULEN, Nathalie, 1050 Brussel (BE); THIENPONT, Hugo, 1050 Brussel (BE)
(74) Representative: Grünecker Patent- und Rechtsanwälte PartG mbB
(86) International application number: PCT/JP2024/033937
(87) International publication number: WO 2025/182122

(57) **Abstract**

An inspection device 1 includes: a pulse forming unit that generates a pulse train Pb in which a plurality of optical pulses Pb1 and Pb2 having different center wavelengths are arranged at predetermined time intervals; an optical detection unit 8 that detects a time waveform of the pulse train Pb output from the photonic integrated circuit 5; and an evaluation unit 9 that evaluates the photonic integrated circuit 5 based on the feature quantity of the time waveform. The evaluation unit 9 calculates, based on the feature quantity of the time waveform corresponding to each of the plurality of waveguides having different known lengths, an amount of change in the feature quantity of the time waveform with respect to the length of the waveguide, and calculates a feature quantity of a time waveform of another structure based on the amount of change.

## Description

### Technical Field

The present disclosure relates to an inspection device and an inspection method.

### Background Art

The dispersion measurement device described in Patent Literature 1 includes: a pulse forming unit that forms, from a first optical pulse output from a measurement target, a pulse train including a plurality of second optical pulses having a time difference therebetween and having different center wavelengths; a correlation optical system that receives the pulse train output from the pulse forming unit and outputs correlation light including the auto-correlation of the pulse train; an optical detection unit that detects a time waveform of the correlation light; and a calculation unit that estimates the amount of chromatic dispersion of the measurement target based on the feature quantities of the time waveform.

Dispersion measurement devices such as the one described above are expected to be used as inspection devices for photonic integrated circuits (PICs). A photonic integrated circuit is a device that integrates various optical functions, and transmits information signals using light. An example of evaluating a photonic integrated circuit is to evaluate the photonic integrated circuit using the amount of chromatic dispersion. For example, when a pulse train is input to a photonic integrated circuit, chromatic dispersion may occur while the pulse train propagates through the waveguide of the photonic integrated circuit. Therefore, by estimating the chromatic dispersion in the photonic integrated circuit using a dispersion measurement device and inspecting whether or not the chromatic dispersion deviates from the design value, it is possible to determine whether the photonic integrated circuit is acceptable or defective.

### Citation List

### Patent Literature

Patent Literature 1: Japanese Unexamined Patent Publication No. 2020-169946

### Summary of Invention

### Technical Problem

In the optical transmission path for transmitting a pulse train in a photonic integrated circuit, not only a waveguide but also various structures such as optical elements used for inputting and outputting the pulse train to and from the photonic integrated circuit, including a coupler, a beam splitter, and a diffraction grating, can be included. Therefore, when inspecting a photonic integrated circuit, there is a demand for a method easily evaluating whether or not various structures are formed as designed.

The present disclosure provides an inspection device and an inspection method capable of easily evaluating a photonic integrated circuit.

### Solution to Problem

The present disclosure is summarized as follows.
[1] An inspection device for inspecting a photonic integrated circuit having an optical structure including a plurality of waveguides, the device including: a pulse forming unit that generates a pulse train in which a plurality of optical pulses having different center wavelengths are arranged at predetermined time intervals; an optical detection unit that detects a time waveform of the pulse train output from the photonic integrated circuit; and an evaluation unit that evaluates the photonic integrated circuit based on a feature quantity of the time waveform, wherein the evaluation unit calculates, based on the feature quantity of the time waveform corresponding to each of the plurality of waveguides having different known lengths, an amount of change in the feature quantity of the time waveform with respect to the length of the waveguide, and calculates a feature quantity of a time waveform of another structure based on the amount of change.
   In this inspection device, the time waveform of the pulse train is detected by inputting the pulse train including a plurality of optical pulses having different center wavelengths to the photonic integrated circuit to be inspected. In evaluating the photonic integrated circuit, the amount of change in the feature quantity of the time waveform with respect to the length of the waveguide is calculated using the feature quantity of the time waveform corresponding to each of the plurality of waveguides, which have different known lengths, and the feature quantity of the time waveform of another structure is calculated based on the amount of change. The feature quantity of the time waveform of the other structure, which is an unknown parameter, can be derived from an equation indicating the amount of change in the feature quantity of the time waveform corresponding to each of the plurality of waveguides whose lengths are known. Therefore, in this inspection device, it is possible to easily evaluate the photonic integrated circuit.
[2] The inspection device according to [1], wherein the pulse forming unit generates a pulse train in which wavelength differences between the plurality of optical pulses are equal. In this case, by making the wavelength differences between the optical pulses passing through the plurality of waveguides equal, the equation for calculating the feature quantity of the other structure can be further simplified.
[3] The inspection device according to [1] or [2], wherein the feature quantity of the time waveform is a pulse shift amount on a time axis between the plurality of optical pulses included in the pulse train. In this case, the pulse shift amount on the time axis between optical pulses has linearity with respect to the length of the waveguide. Therefore, by using the pulse shift amount on the time axis between optical pulses as the feature quantity of the time waveform, the equation for calculating the feature quantity of the other structure can be further simplified.
[4] The inspection device according to [3], wherein the evaluation unit derives a linear function showing a relationship between a pulse shift amount corresponding to each of the plurality of waveguides and the length of each of the plurality of waveguides, and evaluates the plurality of waveguides based on a slope of the linear function. Quantities related to the chromatic dispersion of the plurality of waveguides having different lengths appear in the slope of the linear function. Therefore, by calculating the slope of the linear function, it is possible to easily evaluate whether or not the plurality of waveguides have been manufactured as designed.
[5] The inspection device according to [3], wherein the evaluation unit derives a linear function showing a relationship between a pulse shift amount corresponding to each of the plurality of waveguides and the length of each of the plurality of waveguides, and evaluates the other structure based on an intercept of the linear function. The pulse shift amount of the other structure other than the plurality of waveguides appears in the intercept of the linear function. Therefore, by calculating the intercept of the linear function, it is possible to easily evaluate whether or not the other structure has been manufactured as designed.
[6] The inspection device according to [4] or [5], wherein the evaluation unit evaluates the other structure based on a difference between a pulse shift amount corresponding to a waveguide connected to the other structure and a pulse shift amount of the waveguide derived from the linear function. The pulse shift amount of the other structure connected to the waveguide appears as the difference from the pulse shift amount caused by the waveguide. Therefore, by calculating the difference, it is possible to easily evaluate the other structure.
[7] The inspection device according to any one of [1] to [6], wherein the evaluation unit evaluates chromatic dispersion of the photonic integrated circuit. In this case, whether or not the photonic integrated circuit is acceptable or defective can be evaluated based on the chromatic dispersion.
[8] The inspection device according to any one of [1] to [7], wherein the other structure includes at least one of a coupler connected to an input end and an output end of each of the plurality of waveguides to input and output the pulse train, a splitter for splitting the pulse train on the photonic integrated circuit, and a ring resonator for resonating and extracting a part of light from the pulse train. In this case, it is possible to easily evaluate structures necessary for appropriately transmitting the pulse train.
[9] The inspection device according to any one of [1] to [8], wherein the time waveform of the pulse train is a time waveform of correlation light including cross-correlation light or auto-correlation light of the pulse train. In this case, even when the length of the waveguide is short as in the photonic integrated circuit, it is possible to accurately calculate the feature quantity of the time waveform of the pulse train.
[10] An inspection device for inspecting a photonic integrated circuit having an optical structure including a plurality of waveguides, the device including: a pulse forming unit that generates a pulse train in which a plurality of optical pulses having different center wavelengths are arranged at predetermined time intervals; an optical detection unit that detects a time waveform of the pulse train output from the photonic integrated circuit; and an evaluation unit that evaluates the photonic integrated circuit based on a feature quantity of the time waveform, wherein the evaluation unit calculates a feature quantity of a time waveform of another structure based on a difference in the feature quantity of the time waveform corresponding to each of the plurality of waveguides having the same known length.
   In this inspection device, since the lengths of the plurality of waveguides are the same, the differences between the feature quantities of the plurality of time waveforms can be regarded as the feature quantity of another structure. Therefore, it is possible to easily evaluate the structure.
[11] An inspection method for inspecting a photonic integrated circuit having an optical structure including a plurality of waveguides, the method including: a pulse forming step for generating a pulse train in which a plurality of optical pulses having different center wavelengths are arranged at predetermined time intervals; an optical detection step for detecting a time waveform of the pulse train output from the photonic integrated circuit; and an evaluation step for evaluating the photonic integrated circuit based on a feature quantity of the time waveform, wherein the evaluation step, based on the feature quantity of the time waveform corresponding to each of the plurality of waveguides having different known lengths, an amount of change in the feature quantity of the time waveform with respect to the length of the waveguide is calculated, and a feature quantity of a time waveform of another structure is calculated based on the amount of change.
   In this inspection method, the time waveform of correlation light of the pulse train is detected by inputting the pulse train including a plurality of optical pulses having different center wavelengths to the photonic integrated circuit to be inspected. In evaluating the photonic integrated circuit, the amount of change in the feature quantity of the time waveform with respect to the length of the waveguide is calculated using the feature quantity of the time waveform corresponding to each of the plurality of waveguides, which have different known lengths, and the feature quantity of the time waveform of another structure is calculated based on the amount of change. The feature quantity of the time waveform of the other structure, which is an unknown parameter, can be derived from an equation indicating the amount of change in the feature quantity of the time waveform corresponding to each of the plurality of waveguides whose lengths are known. Therefore, in this inspection method, it is possible to easily evaluate the photonic integrated circuit.
[12] The inspection method according to [11], wherein in the pulse forming step, a pulse train in which wavelength differences between the plurality of optical pulses are equal is generated. In this case, by making the wavelength difference between the optical pulses passing through the plurality of waveguides equal, the equation for calculating the feature quantity of the other structure can be further simplified.
[13] The inspection method according to [11] or [12], wherein the feature quantity of the time waveform is a pulse shift amount on a time axis between the plurality of optical pulses included in the pulse train. In this case, the pulse shift amount on the time axis between optical pulses has linearity with respect to the length of the waveguide. Therefore, by using the pulse shift amount on the time axis between optical pulses as the feature quantity of the time waveform, the equation for calculating the feature quantity of the other structure can be further simplified.
[14] The inspection method according to [13], wherein in the evaluation step, a linear function showing a relationship between a pulse shift amount corresponding to each of the plurality of waveguides and the length of each of the plurality of waveguides is derived, and the plurality of waveguides are evaluated based on a slope of the linear function. Quantities related to the chromatic dispersion of the plurality of waveguides having different lengths appear in the slope of the linear function. Therefore, by calculating the slope of the linear function, it is possible to easily evaluate whether or not the plurality of waveguides have been manufactured as designed.
[15] The inspection method according to [13], wherein in the evaluation step, a linear function showing a relationship between a pulse shift amount corresponding to each of the plurality of waveguides and the length of each of the plurality of waveguides is derived, and the other structure is evaluated based on an intercept of the linear function. The pulse shift amount of the other structure other than the plurality of waveguides appears in the intercept of the linear function. Therefore, by calculating the intercept of the linear function, it is possible to easily evaluate whether or not the other structure has been manufactured as designed.
[16] The inspection method according to [14] or [15], wherein in the evaluation step, the other structure is evaluated based on a difference between a pulse shift amount corresponding to a waveguide connected to the other structure and a pulse shift amount of the waveguide derived from the linear function. The pulse shift amount of the other structure connected to the waveguide appears as the difference from the pulse shift amount caused by the waveguide. Therefore, by calculating the difference, it is possible to easily evaluate the other structure.
[17] The inspection method according to any one of [11] to [16], wherein in the evaluation step, chromatic dispersion of the photonic integrated circuit is evaluated. In this case, whether or not the photonic integrated circuit is acceptable or defective can be evaluated based on the chromatic dispersion.
[18] The inspection method according to any one of [11] to [17], wherein the other structure includes at least one of a coupler connected to an input end and an output end of each of the plurality of waveguides to input and output the pulse train, a splitter for splitting the pulse train on the photonic integrated circuit, and a ring resonator for resonating and extracting a part of light from the pulse train. In this case, it is possible to easily evaluate structures necessary for appropriately transmitting the pulse train.
[19] The inspection method according to any one of [11] to [18], wherein the time waveform of the pulse train is a time waveform of correlation light including cross-correlation light or auto-correlation light of the pulse train. In this case, even when the length of the waveguide is short as in the photonic integrated circuit, it is possible to accurately calculate the feature quantity of the time waveform of the pulse train.
[20] An inspection method for inspecting a photonic integrated circuit having an optical structure including a plurality of waveguides, the method comprising:
   a pulse forming step for generating a pulse train in which a plurality of optical pulses having different center wavelengths are arranged at predetermined time intervals; an optical detection step for detecting a time waveform of the pulse train output from the photonic integrated circuit; and an evaluation step for evaluating the photonic integrated circuit based on a feature quantity of the time waveform, wherein in the evaluation step, a feature quantity of a time waveform of another structure is calculated based on a difference in the feature quantity of the time waveform corresponding to each of the plurality of waveguides having the same known length.
   In this inspection method, since the lengths of the plurality of waveguides are the same, the differences between the feature quantities of the plurality of time waveforms can be regarded as the feature quantity of another structure. Therefore, it is possible to easily evaluate the structure.
[21] The inspection device according to [1] or [10], wherein the pulse forming unit generates a pulse train in which wavelength differences between the plurality of optical pulses are equal. In this case, by making the wavelength difference between the optical pulses passing through the plurality of waveguides equal, the equation for calculating the feature quantity of the other structure can be further simplified.
[22] The inspection device according to [1], [2], or [10], wherein the feature quantity of the time waveform is a pulse shift amount on a time axis between the plurality of optical pulses included in the pulse train. In this case, the pulse shift amount on the time axis between optical pulses has linearity with respect to the length of the waveguide. Therefore, by using the pulse shift amount on the time axis between optical pulses as the feature quantity of the time waveform, the equation for calculating the feature quantity of the other structure can be further simplified.
[23] The inspection device according to any one of [1] to [6] or [10], wherein the evaluation unit evaluates chromatic dispersion of the photonic integrated circuit. In this case, whether or not the photonic integrated circuit is acceptable or defective can be evaluated based on the chromatic dispersion.
[24] The inspection device according to any one of [1] to [7] or [10], wherein the other structure includes at least one of a coupler connected to an input end and an output end of each of the plurality of waveguides to input and output the pulse train, a splitter for splitting the pulse train on the photonic integrated circuit, and a ring resonator for resonating and extracting a part of light from the pulse train. In this case, it is possible to easily evaluate structures necessary for appropriately transmitting the pulse train.
[25] The inspection device according to any one of [1] to [8] and [10], wherein the time waveform of the pulse train is a time waveform of correlation light including cross-correlation light or auto-correlation light of the pulse train. In this case, even when the length of the waveguide is short as in the photonic integrated circuit, it is possible to accurately calculate the feature quantity of the time waveform of the pulse train.
[26] The inspection method according to [11] or [20], wherein in the pulse forming step, a pulse train in which wavelength differences between the plurality of optical pulses are equal is generated. In this case, by making the wavelength difference between the optical pulses passing through the plurality of waveguides equal, the equation for calculating the feature quantity of the other structure can be further simplified.
[27] The inspection method according to [11], [12], or [20], wherein the feature quantity of the time waveform is a pulse shift amount on a time axis between the plurality of optical pulses included in the pulse train. In this case, the pulse shift amount on the time axis between optical pulses has linearity with respect to the length of the waveguide. Therefore, by using the pulse shift amount on the time axis between optical pulses as the feature quantity of the time waveform, the equation for calculating the feature quantity of the other structure can be further simplified.
[28] The inspection method according to any one of [11] to [16] and [20], wherein in the evaluation step, chromatic dispersion of the photonic integrated circuit is evaluated. In this case, whether or not the photonic integrated circuit is acceptable or defective can be evaluated based on the chromatic dispersion.
[29] The inspection method according to any one of [11] to [17] and [20], wherein the other structure includes at least one of a coupler connected to an input end and an output end of each of the plurality of waveguides to input and output the pulse train, a splitter for splitting the pulse train on the photonic integrated circuit, and a ring resonator for resonating and extracting a part of light from the pulse train. In this case, it is possible to easily evaluate structures necessary for appropriately transmitting the pulse train.
[30] The inspection method according to any one of [11] to [18] and [20], wherein the time waveform of the pulse train is a time waveform of correlation light including cross-correlation light or auto-correlation light of the pulse train. In this case, even when the length of the waveguide is short as in the photonic integrated circuit, it is possible to accurately calculate the feature quantity of the time waveform of the pulse train.

In this inspection method, since the lengths of the plurality of waveguides are the same, the differences between the feature quantities of the plurality of time waveforms can be regarded as the feature quantity of the other structure. Therefore, it is possible to easily evaluate the structure.

### Advantageous Effects of Invention

According to the present disclosure, it is possible to easily evaluate a photonic integrated circuit.

### Brief Description of Drawings

[FIG. 1] FIG. 1 is a drawing schematically showing the configuration of an inspection device according to one embodiment of the present invention.
[FIG. 2] FIG. 2 is a drawing showing an example of the configuration of a pulse forming unit.
[FIG. 3] FIG. 3 is a drawing showing an example of a modulation surface of a spatial light modulator.
[FIG. 4] FIG. 4 is a schematic drawing schematically showing a photonic integrated circuit.
[FIG. 5] FIG. 5 is a drawing schematically showing an example of the configuration of a correlation optical system.
[FIG. 6] FIG. 6 is a drawing schematically showing another example of the configuration of the correlation optical system.
[FIG. 7] FIG. 7(a) is a drawing showing an example of a time waveform of correlation light when no chromatic dispersion occurs in a pulse train, and FIG. 7(b) is a drawing showing an example of a time waveform of correlation light when chromatic dispersion occurs in a pulse train.
[FIG. 8] FIG. 8 is a graph showing an example of a time waveform of correlation light.
[FIG. 9] FIGS. 9(a), 9(b), 9(c), and 9(d) are drawings showing examples of a delay time of a pulse train.
[FIG. 10] FIG. 10 is a diagram schematically showing an example of the hardware configuration of an evaluation unit.
[FIG. 11] FIG. 11 is a flowchart showing an inspection method using an inspection device.
[FIG. 12] FIG. 12 is a drawing schematically showing a photonic integrated circuit when a plurality of waveguides are included.
[FIG. 13] FIG. 13 is a drawing showing an example of a method for evaluating a structure included in a photonic integrated circuit.
[FIG. 14] FIG. 14 is a drawing showing another example of the method for evaluating a structure included in a photonic integrated circuit.
[FIG. 15] FIG. 15(a) is a drawing schematically showing a photonic integrated circuit according to a second embodiment, and FIG. 15(b) is a drawing showing an example of a method for evaluating a structure included in the photonic integrated circuit according to the second embodiment.
[FIG. 16] FIG. 16(a) is a drawing schematically showing a photonic integrated circuit according to a third embodiment, and FIG. 16(b) is a drawing showing an example of a method for evaluating a structure included in the photonic integrated circuit according to the third embodiment.
[FIG. 17] FIG. 17(a) is a drawing schematically showing a photonic integrated circuit according to a fourth embodiment, and FIG. 17(b) is a drawing showing an example of a method for evaluating a structure included in the photonic integrated circuit according to the fourth embodiment.
[FIG. 18] FIG. 18(a) is a drawing schematically showing a photonic integrated circuit according to a fifth embodiment, and FIG. 18(b) is a drawing showing an example of a method for evaluating a structure included in the photonic integrated circuit according to the fifth embodiment.
[FIG. 19] FIG. 19 is a flowchart showing an inspection method for evaluating the photonic integrated circuit according to the fifth embodiment.
[FIG. 20] FIG. 20(a) is a drawing schematically showing a photonic integrated circuit according to a sixth embodiment, and FIG. 20(b) is a drawing showing an example of a method for evaluating a structure included in the photonic integrated circuit according to the sixth embodiment.
[FIG. 21] FIG. 21(a) is a drawing schematically showing a photonic integrated circuit according to a seventh embodiment, and FIG. 21(b) is a drawing showing an example of a method for evaluating a structure included in the photonic integrated circuit according to the seventh embodiment.
[FIG. 22] FIG. 22 is a flowchart showing an inspection method for evaluating the photonic integrated circuit according to the seventh embodiment.

### Description of Embodiments

Hereinafter, preferred embodiments of an inspection device according to one aspect of the present disclosure will be described in detail with reference to the drawings.

### [Configuration of an inspection device]

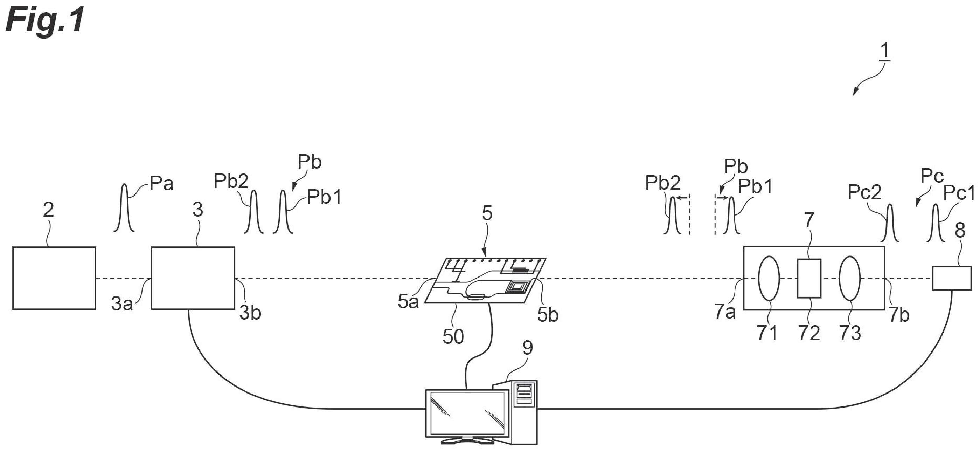

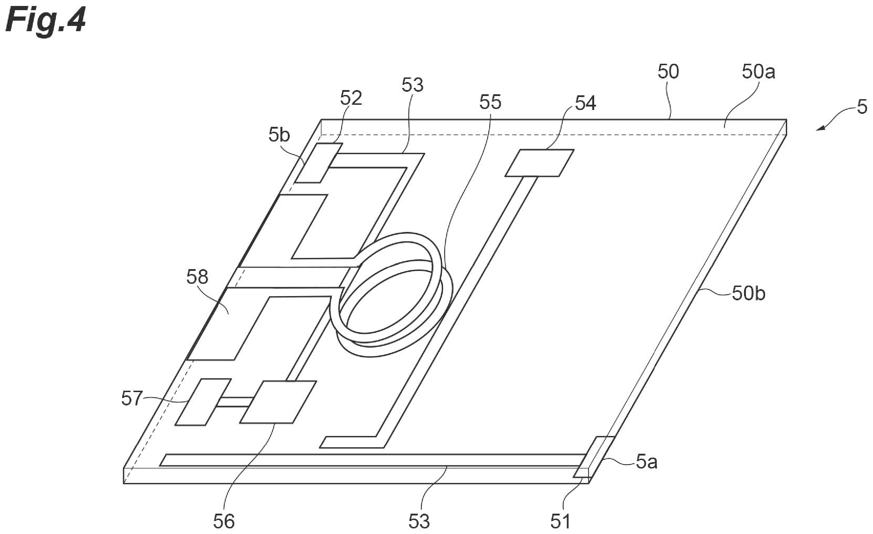

FIG. 1 is a drawing schematically showing the configuration of an inspection device according to one embodiment of the present invention. This inspection device 1 is a device for inspecting a photonic integrated circuit 5. The photonic integrated circuit 5 includes not only a waveguide 53 provided on a substrate 50 but also various optical structures (see FIG. 4). In the present embodiment, the inspection device 1 is a device for measuring the chromatic dispersion of light to be measured that has propagated through the structure of the photonic integrated circuit 5. The inspection device 1 includes a pulsed laser light source 2, a pulse forming unit 3, a correlation optical system 7, an optical detection unit 8, and an evaluation unit 9.

An optical input end 3a of the pulse forming unit 3 is optically coupled to the pulsed laser light source 2 either spatially or through an optical waveguide such as an optical fiber. An optical input end 5a of the photonic integrated circuit 5 to be inspected is optically coupled to an optical output end 3b of the pulse forming unit 3 either spatially or through an optical waveguide such as an optical fiber. An optical input end 7a of the correlation optical system 7 is optically coupled to an optical output end 5b of the photonic integrated circuit 5 either spatially or through an optical waveguide such as an optical fiber. The optical detection unit 8 is optically coupled to an optical output end 7b of the correlation optical system 7 either spatially or through an optical waveguide such as an optical fiber. The evaluation unit 9 is electrically connected to each of the pulse forming unit 3, the photonic integrated circuit 5, and the optical detection unit 8.

The pulsed laser light source 2 outputs a coherent optical pulse to be measured Pa. The pulsed laser light source 2 is, for example, a femtosecond laser, and in one embodiment, is a solid-state laser light source such as an LD direct-pumped Yb:YAG pulsed laser. The time waveform of the optical pulse to be measured Pa is, for example, Gaussian in shape. The optical pulse to be measured Pa is an optical pulse having a certain bandwidth, and includes a plurality of continuous wavelength components. In addition, the pulsed laser light source 2 may be a light source that outputs an attosecond laser, a femtosecond laser, or a picosecond laser, or may be a titanium-sapphire laser light source, a semiconductor laser light source, or an F2 laser light source.

The pulse forming unit 3 forms a pulse train Pb including a plurality of optical pulses from the optical pulse to be measured Pa. The pulse train Pb is a group of single pulses generated by dividing the spectrum forming the optical pulse to be measured Pa into a plurality of wavelength bands and using each of the wavelength bands. In addition, at the boundaries of the plurality of wavelength bands, there may be portions overlapping each other. In the following example, the pulse train Pb includes two single pulses, which are optical pulses Pb1 and Pb2. The center wavelength and the wavelength band of the optical pulse Pb1 are different from the center wavelength and the wavelength band of the optical pulse Pb2.

In the pulse train Pb, a plurality of optical pulses Pb1 and Pb2 having different center wavelengths are arranged at predetermined time intervals. The peaks of the two optical pulses Pb1 and Pb2 are temporally separated from each other, and the propagation timings of the two optical pulses Pb1 and Pb2 are shifted from each other. In other words, the other optical pulse Pb2 has a time delay with respect to one optical pulse Pb1. However, tail portions of the adjacent optical pulses Pb1 and Pb2 may overlap each other.

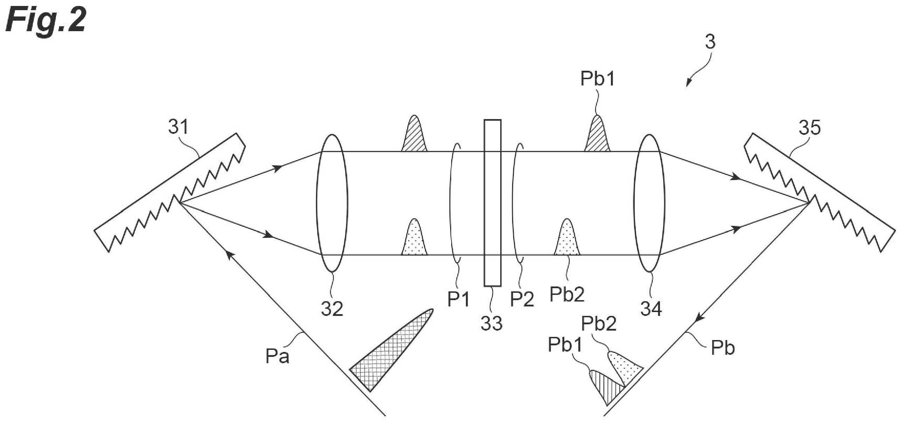

FIG. 2 is a drawing showing an example of the configuration of the pulse forming unit 3. This pulse forming unit 3 includes a diffraction grating 31, a lens 32, a spatial light modulator (SLM) 33, a lens 34, and a diffraction grating 35. The diffraction grating 31 is an example of a spectroscopic element. The diffraction grating 31 is optically coupled to the pulsed laser light source 2. The spatial light modulator 33 is optically coupled to the diffraction grating 31 through the lens 32. The diffraction grating 31 spatially separates, for each wavelength, a plurality of wavelength components included in the optical pulse to be measured Pa. In addition, as the spectroscopic element, other optical components such as a prism may be used instead of the diffraction grating 31. The optical pulse to be measured Pa is incident obliquely on the diffraction grating 31 and is spectrally separated into a plurality of wavelength components. Light P1 including the plurality of wavelength components is condensed for each wavelength component by the lens 32 and is imaged on the modulation surface of the spatial light modulator 33. The lens 32 may be a convex lens formed of a light-transmitting member, or may be a concave mirror having a concave light-reflecting surface.

The spatial light modulator 33 converts the light P1 into modulated light P2. The spatial light modulator 33 may be a reflective spatial light modulator or a transmissive spatial light modulator. In addition, the spatial light modulator 33 may be a liquid crystal type spatial light modulator or a digital mirror device. The modulated light P2 includes the optical pulses Pb1 and Pb2. The spatial light modulator 33 selects two arbitrary wavelength components, as the optical pulses Pb1 and Pb2, from the light P1 including a plurality of wavelength components. For example, the spatial light modulator 33 may perform intensity modulation so that the wavelength components of the optical pulses Pb1 and Pb2 become sufficiently large so as not to be affected by other wavelength components. Depending on the values of the selected wavelength components, a wavelength difference, which is a difference between the wavelength of the optical pulse Pb1 and the wavelength of the optical pulse Pb2, changes. As a result, the spatial light modulator 33 sets the wavelength difference between the two optical pulses Pb1 and Pb2 to an arbitrary magnitude. The wavelength difference that can be set is, for example, 1 nm to 50 nm.

The spatial light modulator 33 shifts the phases of the two optical pulses Pb1 and Pb2 relative to each other. To achieve this, the spatial light modulator 33 performs phase modulation on the light P1. As a result, the optical pulse Pb2 has a time delay with respect to the optical pulse Pb1. That is, the spatial light modulator 33 sets the time difference between the two optical pulses Pb1 and Pb2 to an arbitrary magnitude. The spatial light modulator 33 generates the modulated light P2 by performing intensity modulation and phase modulation on the light P1.

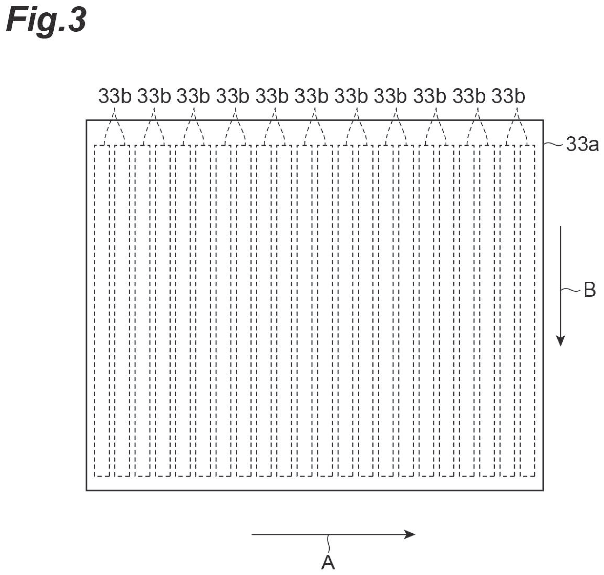

The modulation of the light P1 by the spatial light modulator 33 will be described in more detail. FIG. 3 is a drawing showing a modulation surface 33a of the spatial light modulator 33. As shown in FIG. 3, on the modulation surface 33a, a plurality of modulation regions 33b are arranged along a certain direction A, and each modulation region 33b extends in a direction B crossing the direction A. The direction A is a spectral direction by the diffraction grating 31. The modulation surface 33a functions as a Fourier transform plane, and each of the corresponding wavelength components after spectral decomposition is incident on each of the plurality of modulation regions 33b.

The spatial light modulator 33 modulates the intensity and phase of each incident wavelength component independently of other wavelength components in each modulation region 33b. Each modulation region 33b includes, for example, an intensity modulation pattern and a phase modulation pattern. The intensity modulation pattern and the phase modulation pattern differ, for example, for each modulation region 33b. The intensity modulation pattern and the phase modulation pattern in each modulation region 33b change along the direction A and are constant in the direction B, for example. The modulation amount of the intensity pattern in the modulation region 33b on which the wavelength components of the optical pulses Pb1 and Pb2 are incident may be larger than the modulation amount of the intensity pattern in the modulation region 33b on which other wavelength components are incident. The modulation amount of the phase pattern in the modulation region 33b on which the wavelength component of the optical pulse Pb1 is incident may be larger than the modulation amount of the phase pattern in the modulation region 33b on which the wavelength component of the optical pulse Pb2 is incident.

The optical pulses Pb1 and Pb2 included in the modulated light P2 modulated by the spatial light modulator 33 are collected at one point on the diffraction grating 35 by the lens 34. At this time, the lens 34 functions as a condensing optical system that condenses the modulated light P2. The lens 34 may be a convex lens formed of a light-transmitting member, or may be a concave mirror having a concave light-reflecting surface. In addition, the diffraction grating 35 functions as a multiplexing optical system, and multiplexes the optical pulses Pb1 and Pb2. That is, by the lens 34 and the diffraction grating 35, the optical pulses Pb1 and Pb2 of the modulated light P2 are condensed and multiplexed to become a band-controlled multi-pulse (pulse train Pb).

FIG. 4 is a schematic drawing schematically showing the photonic integrated circuit 5. The photonic integrated circuit 5 is a device that integrates various optical functions, and transmits information signals using light. The photonic integrated circuit 5 includes a substrate 50. As shown in FIG. 4, the photonic integrated circuit 5 includes various elements, and these elements are mounted on the substrate 50. In the example shown in FIG. 4, the photonic integrated circuit 5 includes an optical input section 51, an optical output section 52, a waveguide 53, photodiodes 54 and 57, an optical ring resonance circuit 55, a photonic crystal 56, a microheater 58, and the like. In the example shown in FIG. 4, only one waveguide 53 is provided, but a plurality of waveguides may be provided. In this case, other structures may be connected to each of the plurality of waveguides. Examples using a plurality of waveguides will be described later.

The substrate 50 has a first surface 50a and a second surface 50b on a side opposite to the first surface 50a. In the example shown in FIG. 4, the optical input section 51, the optical output section 52, the waveguide 53, the photodiodes 54 and 57, the optical ring resonance circuit 55, and the photonic crystal 56 are mounted on the second surface 50b. The microheater 58 is mounted on the first surface 50a.

The optical input section 51 is a part through which light is input from the pulse forming unit 3 to the inside of the photonic integrated circuit 5. The optical input section 51 is formed at the optical input end 5a, which is one side surface of the photonic integrated circuit 5. Although only one optical input section 51 is shown in FIG. 4, a plurality of optical input sections 51 are formed at the optical input end 5a. For example, in a state put into practical use after inspection, an optical cable is connected to the optical input section 51.

The optical output section 52 is a part through which the pulse train Pb is output from the photonic integrated circuit 5 toward the correlation optical system 7. The optical output section 52 is formed at the optical output end 5b, which is the other end surface of the photonic integrated circuit 5. Although a single optical output section 52 is shown in FIG. 4, a plurality of optical output sections 52 may be formed at the optical output end 5b. For example, in a state put into practical use after inspection, an optical cable may be connected to each of the plurality of optical output sections 52. The optical output section 52 may output light guided by the waveguide 53 to the outside of the photonic integrated circuit 5.

The photodiodes 54 and 57 are photodetectors provided inside the photonic integrated circuit 5. The optical ring resonance circuit 55 is a circuit for setting a resonance wavelength. The photonic crystal 56 is a structure in which a refractive index changes periodically, and is a structure that confines light in a small region to manipulate the light. In addition, the photonic integrated circuit 5 may include not only the above-described components (elements) but also various other elements.

The microheater 58 may be formed on each element such as the waveguide 53, the optical ring resonance circuit 55, or an optical modulator. In the example shown in FIG. 4, the microheater 58 is formed so as to straddle a part of the waveguide 53 and overlap the optical ring resonance circuit 55. The microheater 58 may receive, for example, an instruction regarding a set temperature from the evaluation unit 9, and increase the temperature until the temperature of the microheater 58 reaches the set temperature and heat a part of the waveguide 53 at the set temperature. The microheater 58 can adjust the amount of chromatic dispersion in the waveguide by changing the refractive index of a part of the waveguide 53 through a thermo-optic effect.

In the example shown in FIG. 4, the waveguide 53 is provided in a straight line from the optical input section 51 to the optical output section 52, but the waveguide 53 may also be formed in a curved shape or in a spiral shape, for example. When the waveguide 53 is curved or spiral, the direction of curvature of the waveguide 53 matches the in-plane direction of the substrate 50. The direction of curvature of the waveguide 53 refers to, for example, a direction in which the waveguide 53 is curved, that is, a direction traced by the curve of the waveguide 53.

Chromatic dispersion occurs in the pulse train Pb input to the photonic integrated circuit 5while the pulse train Pb propagates through the waveguide 53. Since the optical pulses Pb1 and Pb2 have different wavelengths, their propagation speeds in the waveguide 53 are different. As a result, a difference arises between the propagation time of the optical pulse Pb1 and the propagation time of the optical pulse Pb2, causing the time interval between the optical pulse Pb1 and the optical pulse Pb2 to fluctuate.

Referring again to FIG. 1. The correlation optical system 7 generates correlation light, including cross-correlation light or auto-correlation light, of the pulse train Pb output from the photonic integrated circuit 5 through the waveguide 53. In the present embodiment, the correlation optical system 7 includes a lens 71, an optical element 72, and a lens 73. The lens 71 is provided on an optical path between the pulse forming unit 3 and the optical element 72, and condenses the pulse train Pb output from the second adjustment unit 6 onto the optical element 72.

The optical element 72 is, for example, a light-emitting body containing at least one of a nonlinear optical crystal that generates a second harmonic (SHG) and a phosphor. Examples of the nonlinear optical crystal include a KTP (KTiOPO₄) crystal, an LBO (LiB₃O₅) crystal, and a BBO (β-BaB₂O₄) crystal. Examples of the phosphor include coumarin, stilbene, and rhodamine. The optical element 72 receives the pulse train Pb as its input and generates correlation light Pc including the cross-correlation or auto-correlation of the pulse train Pb. The optical element 72 has polarization dependence in a predetermined direction. For example, the optical element 72 is an element having polarization dependence in the polarization directions of the optical pulses Pb1 and Pb2 of the pulse train Pb. The lens 71 collimates or condenses the correlation light Pc output from the optical element 72.

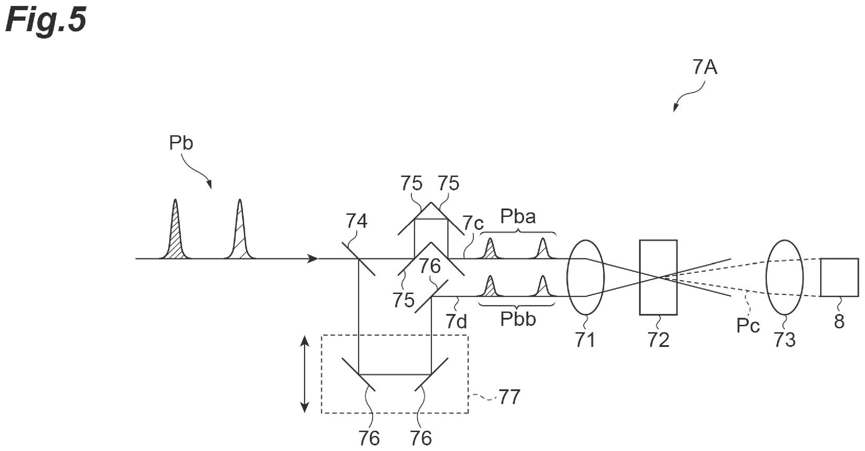

Here, an example of the configuration of the correlation optical system 7 will be described in detail. FIG. 5 is a drawing schematically showing an example of the configuration of the correlation optical system 7. The beam splitter 74 is optically coupled to the photonic integrated circuit 5 shown in FIG. 1, and transmits a part of the pulse train Pb input from the photonic integrated circuit 5 while reflecting the remainder. One pulse train Pba, which is split by the beam splitter 74, reaches the lens 71 through an optical path 7c including a plurality of mirrors 75. The other pulse train Pbb, which is split by the beam splitter 74, reaches the lens 71 through an optical path 7d including a plurality of mirrors 76. The optical length of the optical path 7c and the optical length of the optical path 7d are different from each other. Therefore, the plurality of mirrors 75 and the plurality of mirrors 76 form a delay optical system that provides a time difference between the one pulse train Pba and the other pulse train Pbb split by the beam splitter 74. In addition, by making the optical path length of the optical path 7d variable using the movable stage 77, the time difference between the pulse train Pba and the pulse train Pbb can be varied.

The lens 71 condenses each of the pulse trains Pba and Pbb toward the optical element 72, and causes the optical axes of the pulse trains Pba and Pbb to cross each other at a predetermined angle in the optical element 72 including a nonlinear optical crystal. As a result, in the optical element 72, a second harmonic is generated with the intersection of the pulse trains Pba and Pbb as its starting point. This second harmonic is the correlation light Pc, which includes the auto-correlation of the pulse train Pb. This correlation light Pc is collimated or condensed by the lens 73 and then input to the optical detection unit 8.

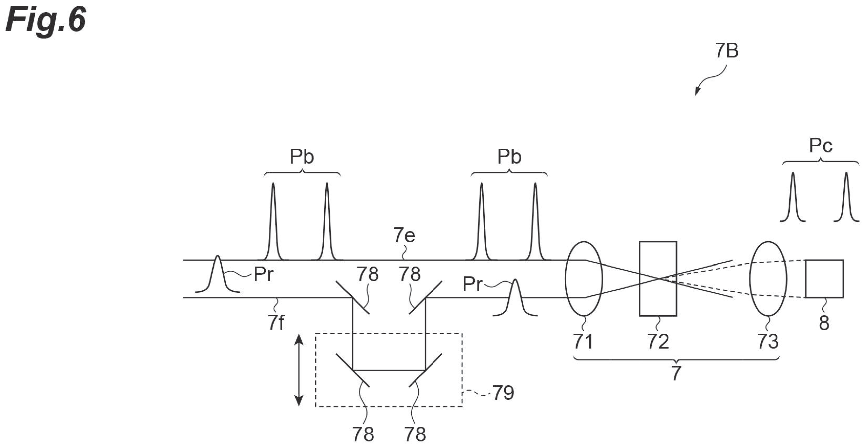

FIG. 6 is a drawing schematically showing another example of the configuration of the correlation optical system 7. In this correlation optical system 7B, the pulse train Pb reaches the lens 71 through an optical path 7e, and a reference optical pulse Pr, which is a single pulse, reaches the lens 71 through an optical path 7f. The optical path 7f includes a plurality of mirrors 78, and is bent in a U-shape. In addition, the optical length of the optical path 7f is variable by the movable stage 79. In this example as well, in the optical element 72, which is a nonlinear optical crystal, a second harmonic is generated with the intersection of the pulse train Pb and the reference optical pulse Pr as its starting point. This second harmonic is the correlation light Pc, which includes the cross-correlation of the pulse train Pb. This correlation light Pc is collimated or condensed by the lens 73 and then input to the optical detection unit 8.

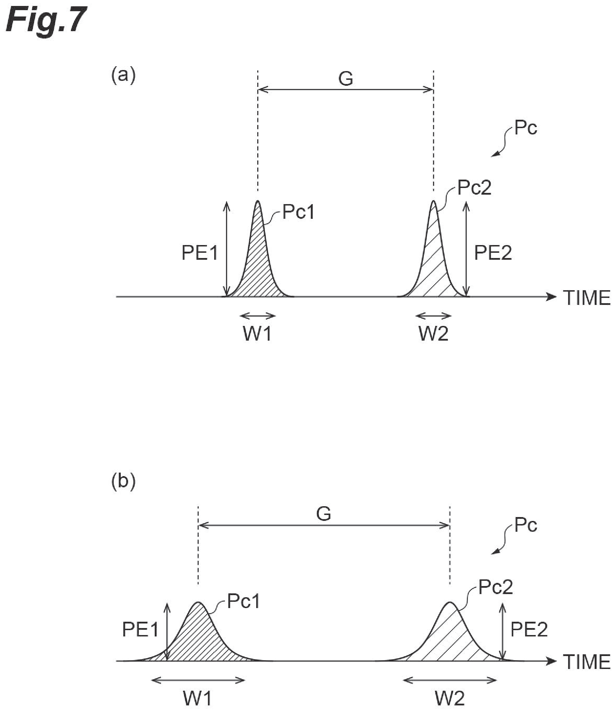

FIG. 7 is a drawing for conceptually explaining the feature quantity of the correlation light Pc. FIG. 7(a) shows an example of the time waveform of the correlation light Pc when no chromatic dispersion occurs in the pulse train Pb (chromatic dispersion is zero) in the waveguide 53 of the photonic integrated circuit 5. FIG. 7(b) shows an example of the time waveform of the correlation light Pc when chromatic dispersion occurs in the pulse train Pb (chromatic dispersion is not zero) in the waveguide 53 of the photonic integrated circuit 5. In the example shown in FIG. 7, the correlation light Pc includes two optical pulses Pc1 and Pc2 corresponding to the optical pulses Pb1 and Pb2, respectively. Here, the peak intensity of the optical pulse Pc1 is defined as PE1, and the peak intensity of the optical pulse Pc2 is defined as PE2. The full width at half maximum (FWHM) of the optical pulse Pc1 is defined as W1, and the full width at half maximum of the optical pulse Pc2 is defined as W2. The peak time interval (pulse interval) between the peak of the optical pulse Pc1 and the peak of the optical pulse Pc2 is defined as G.

As shown in FIGS. 7(a) and 7(b), when chromatic dispersion occurs in the pulse train Pb, the peak intensities PE1 and PE2 of the optical pulses Pc1 and Pc2 are lower and the full widths at half maximum W1 and W2 of the optical pulses Pc1 and Pc2 are larger than those when chromatic dispersion does not occur. In addition, the peak time interval G becomes longer.

Thus, when chromatic dispersion occurs in the pulse train Pb, the feature quantities (the peak intensities PE1 and PE2, the full widths at half maximum W1 and W2, and the peak time interval G) of the time waveform of the correlation light Pc change significantly compared to the case where no chromatic dispersion occurs. Then, the amount of change depends on the amount of chromatic dispersion of the pulse train Pb in the waveguide 53. Therefore, by observing the changes in the feature quantities of the time waveform of the correlation light Pc, the amount of chromatic dispersion of the pulse train Pb in the waveguide 53 can be found out accurately and easily.

Referring again to FIG. 1. The optical detection unit 8 receives the correlation light Pc output from the correlation optical system 7 and detects the time waveform of the correlation light Pc. The optical detection unit 8 includes a photodetector, such as a photodiode, for example. The optical detection unit 8 detects the time waveform of the correlation light Pc by converting the intensity of the correlation light Pc into an electrical signal. The electrical signal, which is the detection result, is provided to the evaluation unit 9.

The evaluation unit 9 calculates the amount of chromatic dispersion based on the feature quantities of the time waveform of the correlation light Pc provided from the optical detection unit 8, and evaluates the structure of the photonic integrated circuit 5. As described above, when the correlation light Pc including the cross-correlation or auto-correlation of the pulse train Pb is generated, various feature quantities (for example, a pulse interval, a peak intensity, and a pulse width) in the time waveform of the correlation light Pc have a significant correlation with the amount of chromatic dispersion of the measurement target. Therefore, the evaluation unit 9 can accurately calculate the amount of chromatic dispersion of the pulse train Pb in the photonic integrated circuit 5, which is a measurement target, based on the feature quantities of the time waveform of the correlation light Pc.

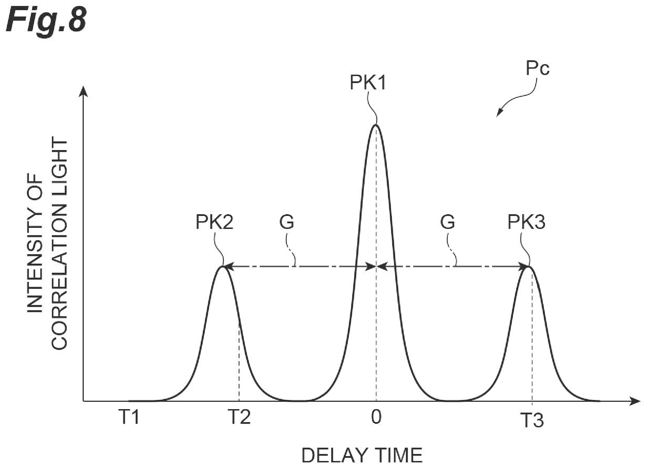

The time waveform of the correlation light Pc will be described in more detail. FIG. 8 is a graph showing an example of the time waveform of the correlation light Pc. The horizontal axis of the graph of the time waveform of the correlation light Pc indicates delay time, and the vertical axis of the graph of the time waveform of the correlation light Pc indicates the intensity of the correlation light Pc.

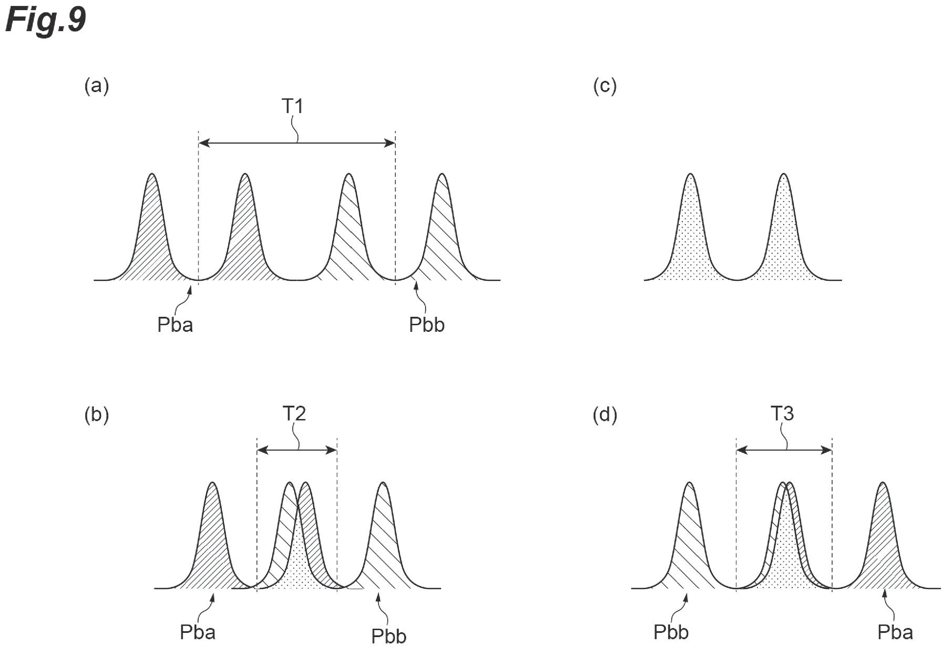

In the correlation optical system 7A shown in FIG. 5, the pulse train Pb is split into the pulse train Pba and the pulse train Pbb by the beam splitter 74. Then, the pulse train Pba and the pulse train Pbb are input to the optical element 72. In the optical element 72, the correlation light Pc, which is a second harmonic, is generated, and the correlation light Pc is input to the optical detection unit 8. The optical detection unit 8 detects the intensity of the correlation light Pc. The intensity of the correlation light Pc changes depending on the time difference between the pulse train Pba and the pulse train Pbb, in other words, the delay time of the pulse train Pba with respect to the pulse train Pbb, or the delay time of the pulse train Pbb with respect to the pulse train Pba. The delay time is adjusted by the movable stage 77. As for the delay time, as shown in FIGS. 9(a) to 9(d), the time from the middle of the two pulses included in the pulse train Pba to the middle of the two pulses included in the pulse train Pbb is defined as delay times T1, T2, and T3.

The optical detection unit 8 includes, for example, a control unit in addition to a photodetector, and the control unit changes the delay time by gradually changing the position of the movable stage 77. In addition, the control unit may include, for example, a counter, may measure the delay time each time the pulse train Pb is input. Then, the control unit may generate the time waveform of the correlation light Pc by plotting the intensity of the electrical signal of the correlation light Pc detected by the photodetector for each measured delay time.

In the example shown in FIG. 8, the intensity of the correlation light Pc is shown for cases where the delay time is T1, T2, 0, and T3. As shown in FIG. 9(a), the delay time T1 is the delay time of the pulse train Pba with respect to the pulse train Pbb. At the delay time T1, the pulse train Pba lags behind the pulse train Pbb, and the pulse train Pbb and the pulse train Pba do not overlap at all. As shown in FIG. 9(b), the delay time T2 is the delay time of the pulse train Pba with respect to the pulse train Pbb. At the delay time T2, the pulse train Pba lags behind the pulse train Pbb, and a part of the pulse train Pbb and a part of the pulse train Pba overlap each other. The case where the delay time is 0 is a case where there is no time difference between the pulse train Pba and the pulse train Pbb, as shown in FIG. 9(c). In this case, the pulse train Pbb and the pulse train Pba completely overlap each other. As shown in FIG. 9(d), the delay time T3 is the delay time of the pulse train Pbb with respect to the pulse train Pba. At the delay time T3, the pulse train Pbb lags behind the pulse train Pba, and a part of the pulse train Pbb and a part of the pulse train Pba overlap each other.

As shown in FIGS. 8 and 9, the smaller the time difference between the pulse train Pba and the pulse train Pbb and the larger the overlapping area between the pulse train Pbb and the pulse train Pba, the stronger the light intensity of the correlation light Pc becomes. The time waveform of the correlation light Pc includes a first peak PK1, a second peak PK2, and a third peak PK3. The first peak PK1 occurs when the delay time is 0. The second peak PK2 occurs when the pulse train Pba lags behind the pulse train Pbb and one of the two pulses in the pulse train Pbb completely overlaps one of the two pulses in the pulse train Pba. The third peak PK3 occurs when the pulse train Pbb lags behind the pulse train Pba and the other of the two pulses in the pulse train Pbb completely overlaps the other of the two pulses in the pulse train Pba.

The optical detection unit 8 detects, for example, the interval between the first peak PK1 and the second peak PK2 or the interval between the first peak PK1 and the third peak PK3, as the peak time interval G, which is a type of feature quantity of the time waveform. The optical detection unit 8 may provide the detected peak time interval G to the evaluation unit 9.

In the example described above, the case where the control unit included in the optical detection unit 8 generates the time waveform of the correlation light Pc has been described. However, the evaluation unit 9 may generate the time waveform of the correlation light Pc. That is, the evaluation unit 9 may function as an optical detection unit. In this case, the optical detection unit 8 may include a photodetector and output the electrical signal of the detected correlation light Pc to the evaluation unit 9. Alternatively, the evaluation unit 9 may include a photodetector instead of the optical detection unit 8. In this case, the correlation light Pc may be input from the correlation optical system 7A to the evaluation unit 9, and the photodetector of the evaluation unit 9 may detect the time waveform of the correlation light Pc and convert the intensity of the correlation light Pc into an electrical signal. The evaluation unit 9 may generate the time waveform of the correlation light Pc by plotting the intensity of the electrical signal of the correlation light Pc output from the optical detection unit 8 or the intensity of the electrical signal converted by the photodetector of the evaluation unit 9, for each measured delay time. The evaluation unit 9 may change the delay time by gradually changing the position of the movable stage 77.

In the example described above, the correlation optical system 7A has been described as an example, but the example described above may also be applied to the correlation optical system 7B. In this case, the optical detection unit 8 or the evaluation unit 9 may change the delay time of the pulse train Pb with respect to the reference optical pulse Pr or the delay time of the reference optical pulse Pr with respect to the pulse train Pb by gradually changing the position of the movable stage 79. Then, the optical detection unit 8 or the evaluation unit 9 may generate the time waveform of the correlation light Pc by plotting the intensity of the electrical signal of the correlation light Pc for each measured delay time. Even when applied to the correlation optical system 7B, the evaluation unit 9 may function as an optical detection unit, similar to when applied to the correlation optical system 7A.

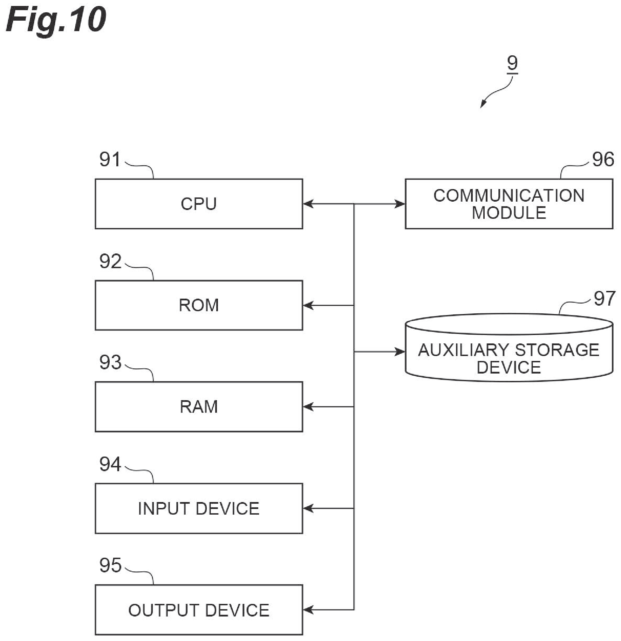

FIG. 10 is a diagram schematically showing an example of the hardware configuration of the evaluation unit 9. As shown in FIG. 10, the evaluation unit 9 may be physically configured as a typical computer including a processor (CPU) 91, main storage devices such as a ROM 92 and a RAM 93, an input device 94 such as a keyboard, a mouse, and a touch screen, an output device 95 such as a display (including a touch screen), a communication module 96 such as a network card for transmitting and receiving data to and from other devices, and an auxiliary storage device 97 such as a hard disk.

The processor 91 of the computer can realize the functions of the evaluation unit 9 described above through a chromatic dispersion amount calculation program. In other words, the chromatic dispersion amount calculation program causes the processor 91 of the computer to operate as the evaluation unit 9. The chromatic dispersion amount calculation program is stored in an internal or external storage device (storage medium) of the computer, such as the auxiliary storage device 97. The storage device may be a non-transitory recording medium. Examples of the recording medium include recording media such as a flexible disk, a CD, and a DVD, a recording medium such as a ROM, a semiconductor memory, and a cloud server.

### [First embodiment of the inspection method]

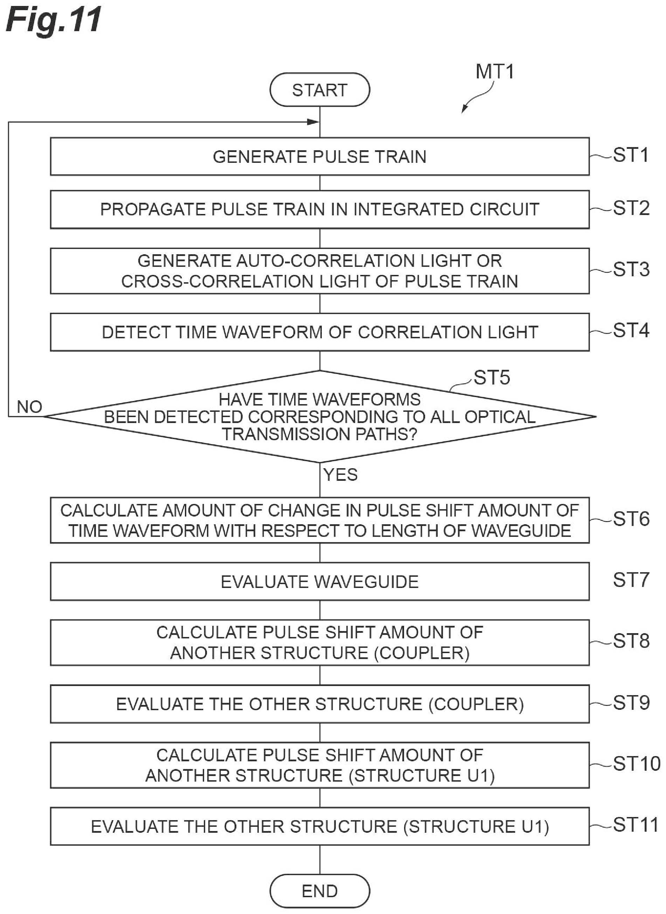

FIG. 11 is a flowchart showing an inspection method MT1 using the inspection device 1 having the above configuration. In this method, first, in step ST1 (pulse forming step), the pulse train Pb is generated in which a plurality of optical pulses Pb1 and Pb2 having different center wavelengths are arranged at predetermined time intervals. For example, a plurality of wavelength components included in the optical pulse to be measured Pa are spatially separated for each wavelength, intensity modulation and phase modulation are performed on the plurality of wavelength components using the spatial light modulator 33, and then the plurality of wavelength components are condensed. The pulse forming unit 3 generates the pulse train Pb such that the wavelength differences between the plurality of optical pulses are equal. In addition, the pulse forming unit 3 may generate the pulse train Pb such that the wavelength differences between the plurality of optical pulses are different. In this case, the pulse forming unit 3 may generate a plurality of pulse trains Pb having different wavelength differences.

Then, in step ST2 (propagation step), the pulse train Pb is propagated through the waveguide 53 of the photonic integrated circuit 5. The optical pulses Pb1 and Pb2 are input from the optical input section 51, guided by the waveguide 53, and then output from the optical output section 52. In step ST2, chromatic dispersion occurs in the pulse train Pb as it propagates through the waveguide 53. For example, a difference arises between the propagation time of the optical pulse Pb1 and the propagation time of the optical pulse Pb2, causing the time interval between the optical pulse Pb1 and the optical pulse Pb2 to fluctuate.

Then, in step ST3 (correlation light generation step), the correlation light Pc including the cross-correlation or auto-correlation of the pulse train Pb is generated using the optical element 72 containing at least one of a nonlinear optical crystal and a phosphor. For example, the pulse train Pb is split into two as shown in FIG. 5, and one split pulse train Pbb is time-delayed with respect to the other pulse train Pba. Then, based on the one time-delayed pulse train Pbb and the other pulse train Pba, the correlation light Pc including the auto-correlation of the pulse train Pb is generated.

Then, in step ST4 (optical detection step), the time waveform of the correlation light Pc is detected. In steps ST5 to ST11 (evaluation step), the photonic integrated circuit 5 is evaluated based on the feature quantity of the time waveform. The evaluation unit 9 evaluates, for example, the chromatic dispersion of the photonic integrated circuit 5. For example, the evaluation unit 9 calculates the amount of chromatic dispersion in each of various structures including the waveguide 53, and evaluates whether or not the various structures are formed as designed.

In the following description, a pulse shift amount will be used as an example of the feature quantity of the time waveform for evaluating the photonic integrated circuit 5. The pulse shift amount is a parameter corresponding to the peak time interval G, and is a pulse shift amount on the time axis between a plurality of optical pulses included in the pulse train Pb.

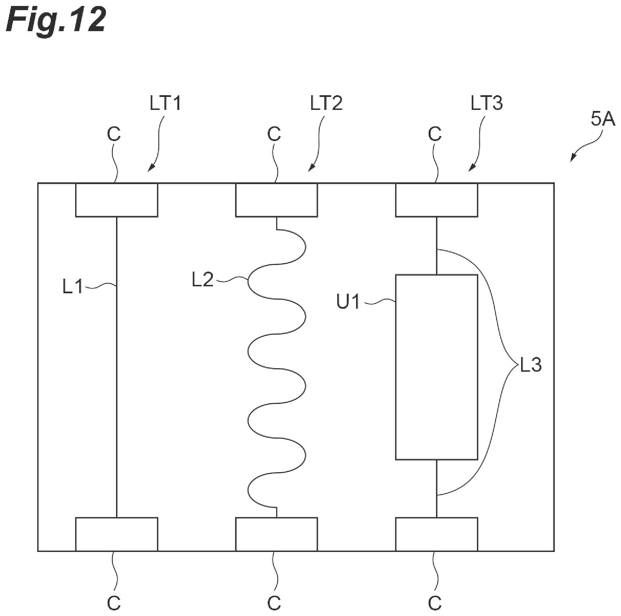

In the present embodiment, as an example of the photonic integrated circuit 5, a photonic integrated circuit 5A including a plurality of waveguides shown in FIG. 12 will be described as an example. The photonic integrated circuit 5A has an optical structure including a plurality of waveguides. As examples of the waveguide 53, the photonic integrated circuit 5A has three waveguides of a waveguide L1, a waveguide L2, and a waveguide L3.

A coupler C is connected to each of the input ends and output ends of the three waveguides L1 to L3. The coupler C on the input end side is an example of the optical input section 51, and causes the pulse train Pb to be input from the pulse forming unit 3 into the photonic integrated circuit 5. The coupler C on the output end side is an example of the optical output section 52, and causes the pulse train Pb to be output from the inside of the photonic integrated circuit 5 toward the correlation optical system 7.

In the photonic integrated circuit 5A, the waveguide L1 and coupler C form an optical transmission path LT1. The waveguide L2 and the coupler C form an optical transmission path LT2. The waveguide L3 has a portion that is divided, and another structure U1 is provided at the divided portion. That is, in addition to the waveguide L3 and the coupler C, the structure U1 forms the optical transmission path LT3.

The three waveguides L1 to L3 have the same material, structure, and optical characteristics, but have different lengths. The lengths of the three waveguides L1 to L3 are each known. In addition, the lengths of the coupler C and the structure U1 are known. In the example shown in FIG. 12, the lengths of the waveguides decrease in the order of L2, L1, and L3. The length of the waveguide L3 is a length obtained by subtracting the length of the structure U1 from the length of the optical transmission path LT3.

In FIG. 11, in step ST5, it is determined whether or not time waveforms have been detected for all of the optical transmission paths LT1 to LT3. In evaluating the photonic integrated circuit 5A, the pulse train Pb is propagated through each of the optical transmission paths LT1 to LT3 to generate the correlation light Pc corresponding to each optical transmission path, and the time waveform is detected corresponding to each optical transmission path. The order in which the pulse train Pb is propagated through the optical transmission paths LT1 to LT3 may be arbitrary, or the propagation may be performed simultaneously. If the detection of the time waveform has not been completed for all of the optical transmission paths LT1 to LT3 (step ST5: NO), steps ST1 to ST4 are repeatedly executed until the detection of the time waveform is completed for all transmission paths.

If the detection of the time waveform has been completed for all of the optical transmission paths LT1 to LT3 (step ST5: YES), in step ST6, the amount of change in the pulse shift amount of the time waveform with respect to the lengths of the waveguide L1 and the waveguide L2 is calculated based on the pulse shift amount of the time waveform corresponding to each of the waveguide L1 and the waveguide L2 among the plurality of waveguides L1 to L3. The pulse shift amounts of the time waveforms corresponding to the waveguide L1 and the waveguide L2 correspond to the pulse shift amounts of the time waveforms detected in the optical transmission path LT1 and the optical transmission path LT2, respectively.

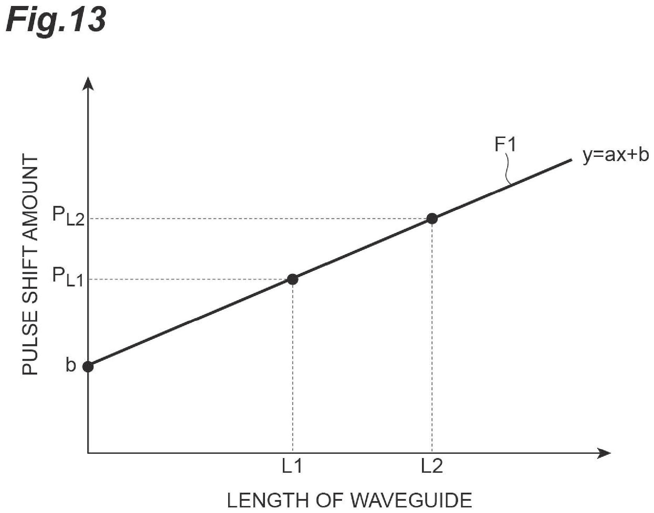

FIG. 13 is a drawing showing an example of a method for evaluating structures included in the photonic integrated circuit 5A. In step ST6, the evaluation unit 9 derives, for example, a linear function F1 showing the relationship between the pulse shift amounts P_{L1} and P_{L2} corresponding to the waveguides L1 and L2 respectively, and the respective lengths of the waveguides L1 and L2. The evaluation unit 9 derives the linear function F1 based on the linear relationship between the length of the waveguide and the pulse shift amount.

The evaluation unit 9 may derive the linear function F1 as follows, for example. FIG. 13 shows the linear function F1 in a coordinate system where the X-axis direction indicates the length of the waveguide and the Y-axis direction indicates the pulse shift amount. For example, the evaluation unit 9 defines the length of each of the waveguide L1 and the waveguide L2 as an X-coordinate value, and defines each of the pulse shift amount P_{L1} corresponding to the waveguide L1 and the pulse shift amount P_{L2} corresponding to the waveguide L2 as a Y-coordinate value. The evaluation unit 9 plots the pulse shift amounts P_{L1} and P_{L2} of the waveguides L1 and L2 whose lengths are known, and defines a straight line connecting the two points as the linear function F1. In this case, the evaluation unit 9 may substitute these X-coordinate values and Y-coordinate values into the equation of the linear function F1, y = ax + b, and solve the simultaneous equations to find the slope a and the intercept b.

Then, in step ST7, the evaluation unit 9 evaluates the plurality of waveguides L1 and L2 based on the slope a of the linear function F1. The pulse shift amounts of the plurality of waveguides L1 and L2 having different lengths appear in the slope a of the linear function F1. The evaluation unit 9 may evaluate the plurality of waveguides L1 and L2 based on the slope a of the linear function F1. For example, the evaluation unit 9 calculates the amount of chromatic dispersion of the waveguide and evaluates the waveguide based on the amount of chromatic dispersion. As described above, since the three waveguides L1 to L3 have the same material, structure, and optical characteristics, a single common value is calculated as the amount of chromatic dispersion of the waveguide. In this case, the unit of chromatic dispersion D is expressed, for example, as [ps/nm/km]. The chromatic dispersion D represents, in the order of ps, the time difference that occurs when two lights λ₁ and λ₂ having a wavelength difference of 1 nm propagate through a waveguide over 1 km. The amount of chromatic dispersion D_{L} of the waveguide is calculated by the following equation 1. In Equation 1, WS is the wavelength difference between the plurality of optical pulses of the pulse train Pb. ${D}_{L} = a / WS$ (1)

Then, in step ST8, the evaluation unit 9 calculates the pulse shift amount of the time waveform of another structure based on the amount of change in the pulse shift amount of the time waveform with respect to the lengths of the waveguides L1 and L2. In this case, another structure refers to the coupler C. The pulse shift amount of the coupler C appears in the intercept b of the linear function F1. In the example shown in FIG. 13, the intercept b of the linear function F1 corresponds to the pulse shift amount of the two couplers C.

Then, in step ST9, the evaluation unit 9 evaluates the coupler C based on the intercept b of the linear function F1. For example, the evaluation unit 9 calculates the amount of chromatic dispersion of the coupler C and evaluates the coupler C based on the amount of chromatic dispersion. The amount of chromatic dispersion D_{C} of the coupler C is calculated by the following Equation 2. In Equation 2, Lc indicates the length of one coupler. ${D}_{C} = b / \left(WS\times 2\times Lc\right)$ (2)

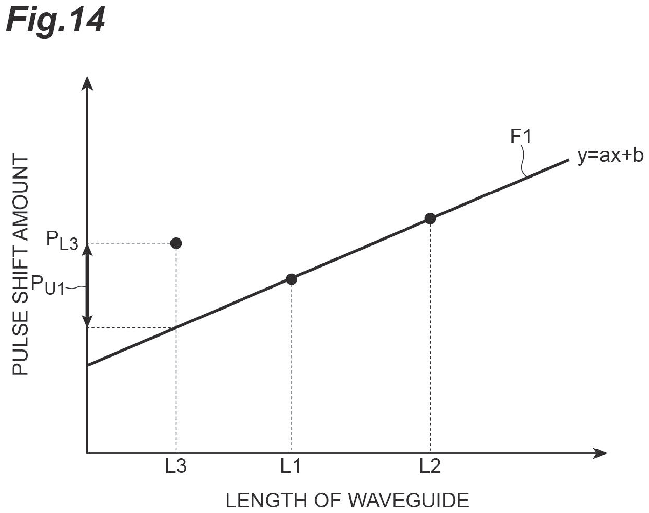

Then, in step ST10, the evaluation unit 9 calculates the feature quantity of the structure U1. FIG. 14 is a drawing showing an example of a method for evaluating the structure U1. For example, the evaluation unit 9 defines the difference between the pulse shift amount P_{L3} corresponding to the waveguide L3 connected to the structure U1 and the pulse shift amount of the waveguide L3 derived from the linear function F1 as the pulse shift amount P_{U1} of the structure U1.

Then, in step ST11, the evaluation unit 9 evaluates the structure U1 based on the pulse shift amount P_{U1}. The amount of chromatic dispersion D_{U1} of the structure U1 is calculated by the following Equation 3. In Equation 3, L_{U1} indicates the unknown length of the structure U1. ${D}_{U 1} = {P}_{U 1} / \left(WS\times {L}_{U 1}\right)$ (3)

### [Functions and effects]

As described above, in the present disclosure, the time waveform of the pulse train Pb is detected by inputting the pulse train Pb including the plurality of optical pulses Pb1 and Pb2 having different center wavelengths to the photonic integrated circuit 5A to be inspected. In evaluating the photonic integrated circuit 5, the amount of change in the feature quantity of the time waveform with respect to the length of the waveguide is calculated using the feature quantity of the time waveform corresponding to each of the plurality of waveguides L1 and L2, which have different known lengths, and the feature quantity of the time waveform of the coupler C, which is another structure, is calculated based on the amount of change. The feature quantity of the time waveform of the coupler C, which is an unknown parameter, can be derived from an equation indicating the amount of change in the feature quantity of the time waveform corresponding to each of the plurality of waveguides L1 and L2 whose lengths are known. Therefore, in the present disclosure, it is possible to easily evaluate the photonic integrated circuit 5A.

In the present disclosure, the pulse train Pb may be generated in which the wavelength difference between the plurality of optical pulses Pb1 and Pb2 is equal. In this case, by making the wavelength difference between the optical pulses passing through the plurality of waveguides L1 to L3 equal, the equation for calculating the feature quantity of the coupler C can be further simplified.

The feature quantity of the time waveform may be a pulse shift amount on the time axis between the plurality of optical pulses Pb1 and Pb2 included in the pulse train Pb. In this case, the pulse shift amount on the time axis between optical pulses has linearity with respect to the length of the waveguide. Therefore, by using the pulse shift amount on the time axis between optical pulses as the feature quantity of the time waveform, the equation for calculating the feature quantity of the coupler C can be further simplified.

In the present disclosure, a linear function F1 showing the relationship between the pulse shift amounts P_{L1} and P_{L2} corresponding to the plurality of waveguides L1 and L2 and the lengths of the plurality of waveguides L1 and L2 may be derived, and the plurality of waveguides L1 and L2 may be evaluated based on the slope a of the linear function F1. In this case, quantities related to the chromatic dispersion of the plurality of waveguides L1 and L2 having different lengths appear in the slope a of the linear function F1. Therefore, by calculating the slope a of the linear function F1, it is possible to easily evaluate whether or not the plurality of waveguides L1 and L2 have been manufactured as designed.

In the present disclosure, a linear function F1 showing the relationship between the pulse shift amounts P_{L1} and P_{L2} corresponding to the plurality of waveguides L1 and L2 and the lengths of the plurality of waveguides L1 and L2 may be derived, and the coupler C may be evaluated based on the intercept b of the linear function F1. The pulse shift amount of the other structure (coupler C) other than the plurality of waveguides appears in the intercept b of the linear function. Therefore, by calculating the intercept b of the linear function F1, it is possible to easily evaluate whether or not the coupler C has been manufactured as designed.

In the present disclosure, the other structure U1 may be evaluated based on the difference between the pulse shift amount P_{L3} corresponding to the waveguide L3 connected to the other structure U1 and the pulse shift amount of the waveguide L3 derived from the linear function F1. The pulse shift amount P_{U1} of the other structure U1 connected to the waveguide L3 appears as the difference from the pulse shift amount caused by the waveguide L3. Therefore, by calculating the difference, it is possible to easily evaluate the other structure U1.

In the present disclosure, the chromatic dispersion of the photonic integrated circuit 5A may be evaluated. In this case, whether or not the photonic integrated circuit 5A is acceptable or defective can be evaluated based on the chromatic dispersion.

In the present disclosure, the time waveform of the pulse train Pb may be the time waveform of the correlation light Pc including the cross-correlation light or auto-correlation light of the pulse train Pb. In this case, even when the length of the waveguide is short as in the photonic integrated circuit 5A, it is possible to accurately calculate the feature quantity of the time waveform of the pulse train Pb.

### [Second embodiment of the inspection method]

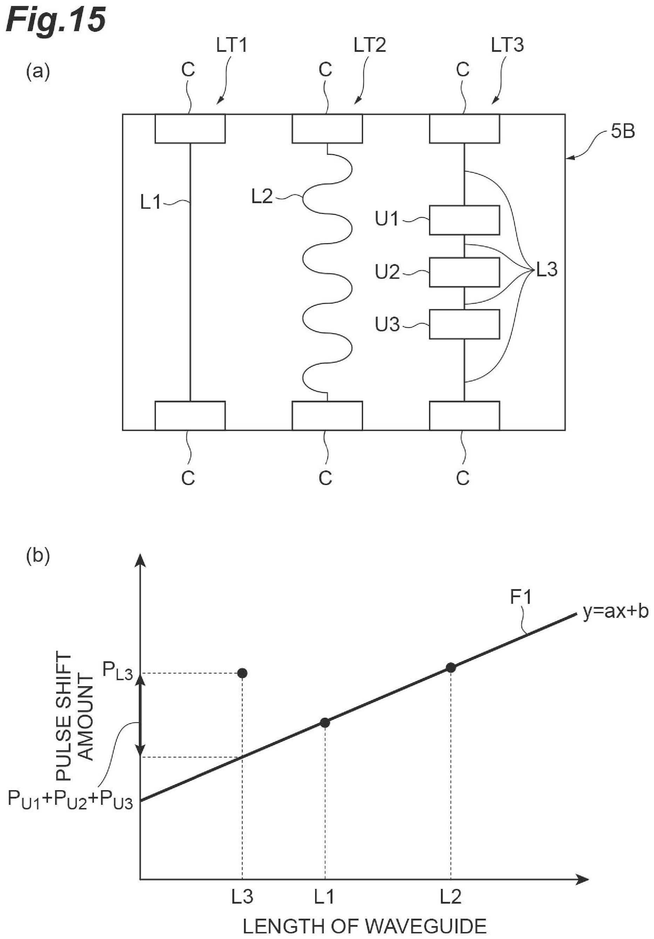

FIG. 15(a) is a drawing schematically showing a photonic integrated circuit 5B according to a second embodiment. FIG. 15(b) is a drawing showing an example of a method for evaluating structures included in the photonic integrated circuit 5B. The photonic integrated circuit 5B is different from the photonic integrated circuit 5A in that the optical transmission path LT3 includes a plurality of structures U1, U2, and U3. Therefore, in the inspection method for the photonic integrated circuit 5B, the pulse shift amounts of the plurality of structures U1, U2, and U3 are calculated in step ST10, and the pulse shift amounts of the plurality of structures U1, U2, and U3 are evaluated in step ST11. As shown in FIG. 15(b), for example, the evaluation unit 9 defines the difference between the pulse shift amount P_{L3} corresponding to the waveguide L3 connected to the plurality of structures U1, U2, and U3 and the pulse shift amount of the waveguide L3 derived from the linear function F1 as the total value of the pulse shift amounts P_{U1}, P_{U2}, and P_{U3} of the plurality of structures U1, U2, and U3. Then, the evaluation unit 9 evaluates the plurality of structures U1, U2, and U3 based on the pulse shift amount P_{U1} + P_{U2} + P_{U3}. The amount of chromatic dispersion D_{U1+U2+U3} of the plurality of structures U1, U2, and U3 is calculated by Equation 4. In Equation 4, L_{U1}, L_{U2}, and L_{U3} indicate the lengths of the plurality of other structures U1, U2, and U3, respectively. ${D}_{U 1 + U 2 + U 3} = \left({P}_{U 1}+{P}_{U 2}+{P}_{U 3}\right) / \left\{WS\times \left({L}_{U 1}+{L}_{U 2}+{L}_{U 3}\right)\right\}$ (4)

### [Third embodiment of the inspection method]

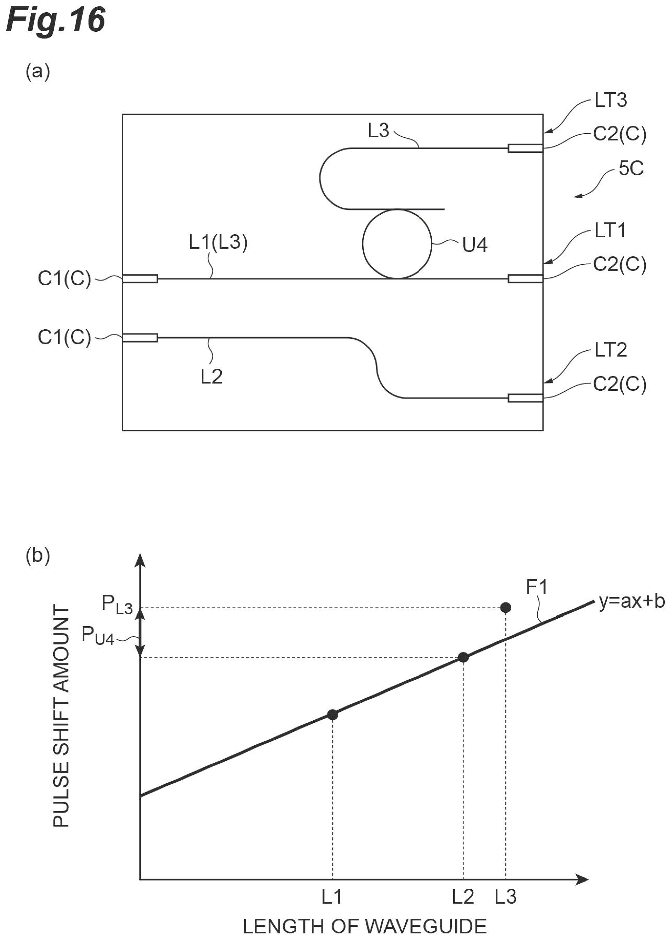

FIG. 16(a) is a drawing schematically showing a photonic integrated circuit 5C according to a third embodiment. FIG. 16(b) is a drawing showing an example of a method for evaluating structures included in the photonic integrated circuit 5C. The photonic integrated circuit 5C is different from the photonic integrated circuit 5A in that the optical transmission path LT3 includes a ring resonator U4 instead of the structure U1. In addition, in the following description, for convenience of explanation, the coupler C may be described as a coupler C1 on the input end side and a coupler C2 on the output end side. In the photonic integrated circuit 5C, the coupler C1 of the optical transmission path LT1 and the coupler C1 of the optical transmission path LT3 are common. In addition, parts of the waveguide L1 and the waveguide L3 are common, and the waveguide L1 and the waveguide L3 are separated from each other through the ring resonator U4. The ring resonator U4 may, for example, resonate and extract a part of the light from the pulse train Pb, and the optical transmission path LT3 may output the light extracted from the coupler C2 on the output end side.

As shown in FIG. 16(b), for example, the evaluation unit 9 defines the difference between the pulse shift amount P_{L3} corresponding to the waveguide L3 connected to the ring resonator U4 and the pulse shift amount of the waveguide L3 derived from the linear function F1 as the pulse shift amount P_{U4} of the ring resonator U4. Then, the evaluation unit 9 may calculate the amount of chromatic dispersion of the ring resonator U4 based on the pulse shift amount P_{U4} and the length of the ring resonator U4 and evaluate the ring resonator U4.

### [Fourth embodiment of the inspection method]

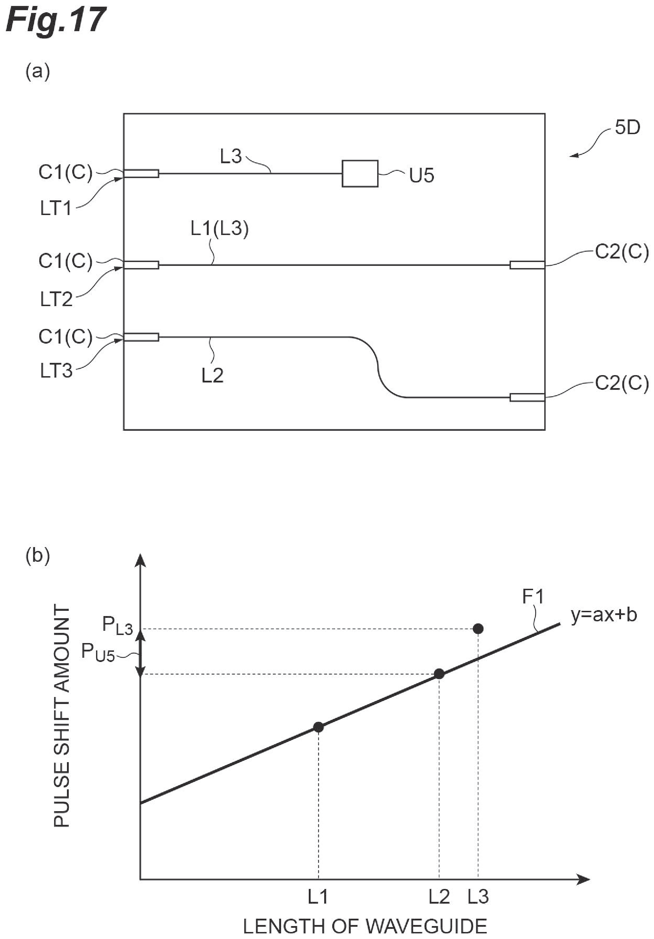

FIG. 17(a) is a drawing schematically showing a photonic integrated circuit 5D according to a fourth embodiment. FIG. 17(b) is a drawing showing an example of a method for evaluating structures included in the photonic integrated circuit 5D. The photonic integrated circuit 5D is different from the photonic integrated circuit 5A in that the optical transmission path LT3 includes a reflective element U5 instead of the structure U1. The reflective element U5 is, for example, a reflective diffraction grating. The pulse train Pb input to the optical transmission path LT3 may propagate through the waveguide L3 and be reflected by the reflective element U5, and the reflected pulse train Pb may propagate again through the waveguide L3 and be output from the coupler C1. The length of the waveguide L3 shown in FIG. 17(b) indicates the round-trip length of the pulse train Pb.

As shown in FIG. 17(b), for example, the evaluation unit 9 defines the difference between the pulse shift amount P_{L3} corresponding to the waveguide L3 connected to the reflective element U5 and the pulse shift amount of the waveguide L3 derived from the linear function F1 as the pulse shift amount P_{U5} of the reflective element U5. Then, the evaluation unit 9 may calculate the amount of chromatic dispersion of the reflective element U5 based on the pulse shift amount P_{U5} and the length of the reflective element U5 and evaluate the reflective element U5.

### [Fifth embodiment of the inspection method]

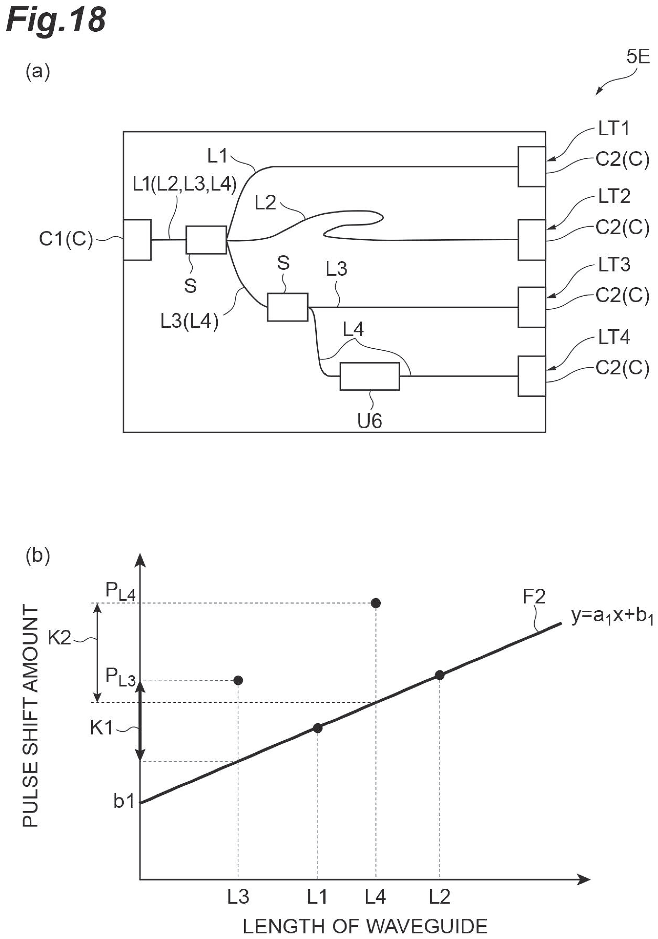

The photonic integrated circuit may have four or more waveguides as the plurality of waveguides. FIG. 18(a) is a drawing schematically showing a photonic integrated circuit 5E according to a fifth embodiment. FIG. 18(b) is a drawing showing an example of a method for evaluating structures included in the photonic integrated circuit 5E. As shown in FIG. 18(a), the photonic integrated circuit 5E has four optical transmission paths LT1 to LT4. The optical transmission path LT1 includes a waveguide L1, two couplers C (a coupler C1 on the input end side and a coupler C2 on the output end side), and one splitter S for branching the waveguide. The optical transmission path LT2 includes a waveguide L2, two couplers C, and one splitter S. The optical transmission path LT3 includes a waveguide L3, two couplers C, and two splitters S. The optical transmission path LT4 includes a waveguide L4, two couplers C, two splitters S, and a structure U6. The coupler C1 on the input end side included in the optical transmission paths LT1 to LT4 is common. Parts of the waveguides L1 to L4 are common, and the common part of the waveguides L1 to L4 is branched into three waveguides by the splitter S arranged on the input end side. Parts of the waveguides L3 and L4 are common, and the common part of the waveguides L3 and L4 is branched into two waveguides by the splitter S located on the output end side. The respective lengths of the waveguides L1 to L4, the couplers C, the splitters S, and the structure U6 are known.

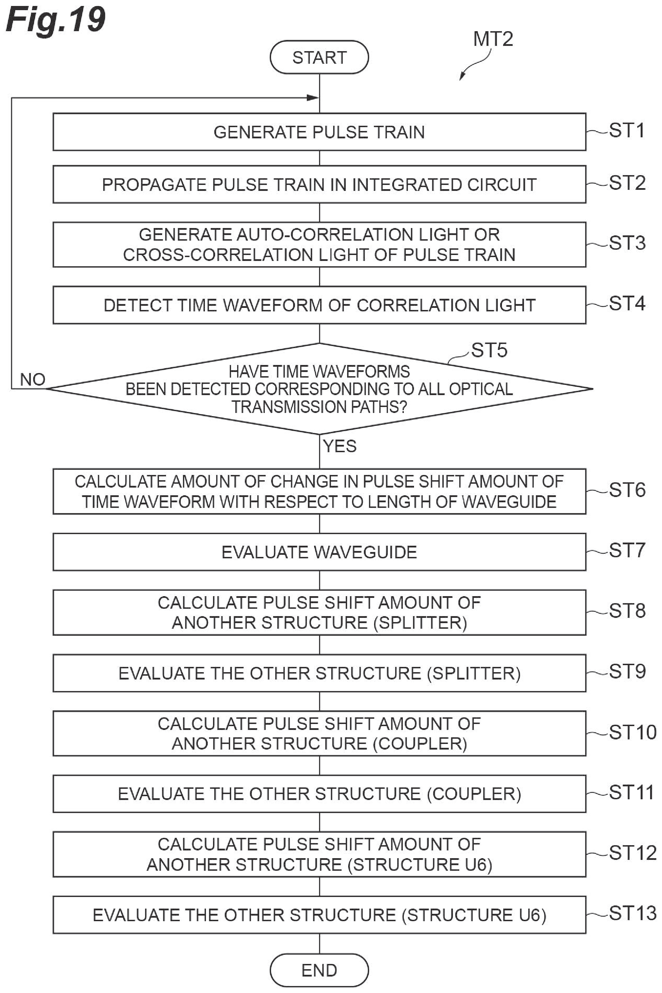

FIG. 19 is a flowchart showing an inspection method MT2 for evaluating the photonic integrated circuit 5E. In the inspection method MT2, steps ST1 to ST5 and step ST7 are the same as in the inspection method MT1. In step ST6, the evaluation unit 9 derives a linear function F2 showing the relationship between the pulse shift amounts P_{L1} and P_{L2} corresponding to the waveguides L1 and L2 and the lengths of the waveguides L1 and L2. In the intercept b1 of the linear function F2, the total value of the pulse shift amounts of the two couplers C and the pulse shift amount of one splitter S appears.

In step ST8, for example, the evaluation unit 9 calculates the pulse shift amount of the splitter S based on the linear function F2. For example, the evaluation unit 9 defines the difference between the pulse shift amount P_{L3} corresponding to the waveguide L3 connected to the two splitters S and the pulse shift amount of the waveguide L3 derived from the linear function F2 as a pulse shift amount K1 of one splitter S.

Then, in step ST9, the evaluation unit 9 evaluates the splitter S based on the pulse shift amount K1. The amount of chromatic dispersion D_{S} of the splitter S is calculated by Equation 5. In Equation 5, L_{S} indicates the length of the splitter S. ${D}_{S} = K 1 / \left(WS\times {L}_{S}\right)$ (5)

Then, in step ST10, for example, the evaluation unit 9 calculates the pulse shift amount of the coupler C based on the linear function F2. The evaluation unit 9 calculates, as the pulse shift amount of the coupler C, the difference (b1 - K1) between the intercept b1, which is the total value of the pulse shift amounts of the two couplers C and the pulse shift amount of one splitter S, and the pulse shift amount K1 of one splitter S. Then, in step ST11, for example, the evaluation unit 9 evaluates the coupler C based on the linear function F2. The amount of chromatic dispersion D_{C} of the coupler C is calculated by Equation 6. ${D}_{C} = \left(b1-K1\right) / \left(WS\times 2\times {L}_{C}\right)$ (6)

Then, in step ST12, for example, the evaluation unit 9 calculates the pulse shift amount of the structure U6 based on the linear function F2. For example, the evaluation unit 9 defines the difference between the pulse shift amount P_{L4} corresponding to the waveguide L4 connected to the two splitters S and another structure U6 and the pulse shift amount of the waveguide L4 derived from the linear function F2 as the total value K2 of the pulse shift amounts of one splitter S and the structure U6. The evaluation unit 9 calculates, as the pulse shift amount of the structure U6, the difference (K2 - K1) between the total value K2 of the pulse shift amounts of one splitter S and the structure U6 and the pulse shift amount K1 of one splitter S. Then, in step ST13, for example, the evaluation unit 9 evaluates the structure U6 based on the linear function F2. The amount of chromatic dispersion D_{U6} of the structure U6 is calculated by Equation 7. In Equation 7, L_{U6} indicates the length of the structure U6. ${D}_{U 6} = \left(K2-K1\right) / \left(WS\times {L}_{U 6}\right)$ (7)

### [Sixth embodiment of the inspection method]

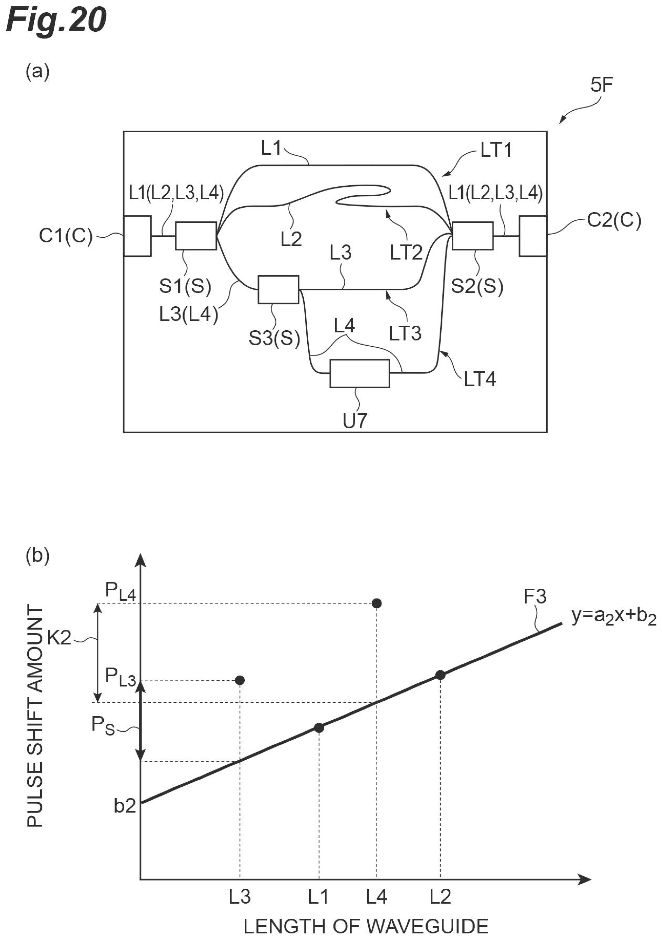

FIG. 20(a) is a drawing schematically showing a photonic integrated circuit 5F according to a sixth embodiment. FIG. 20(b) is a drawing showing an example of a method for evaluating structures included in the photonic integrated circuit 5F. As shown in FIG. 20(a), the photonic integrated circuit 5F has four optical transmission paths LT1 to LT4. The optical transmission path LT1 includes a waveguide L1, two couplers C (a coupler C1 on the input end side and a coupler C2 on the output end side), and two splitters S (a splitter S1 for branching the waveguide and a splitter S2 for combining the waveguides). The optical transmission path LT2 includes a waveguide L2, two couplers C, and two splitters S. The optical transmission path LT3 includes a waveguide L3, two couplers C, and three splitters S (splitters S1 and S3 for branching the waveguide and a splitter S2 for combining the waveguides). The optical transmission path LT4 includes a waveguide L3, two couplers C, three splitters S, and a structure U7. The coupler C1 on the input end side, the splitter S1, the splitter S2, and the coupler C2 on the output end side that are included in the optical transmission paths LT1 to LT4 are common. Parts of the waveguides L1 to L4 are common, and the common part of the waveguides L1 to L4 is branched into three waveguides by the splitter S1. Parts of the waveguides L3 and L4 are common, and the common part of the waveguides L3 and L4 is branched into two waveguides by the splitter S3. The lengths of the waveguides L1 to L4, the coupler C, the splitter S, and the structure U7 are known.

The inspection method for evaluating the photonic integrated circuit 5F is the same as the inspection method MT2. In step ST6, the evaluation unit 9 derives a linear function F3 showing the relationship between the pulse shift amounts P_{L1} and P_{L2} corresponding to the waveguides L1 and L2 and the lengths of the waveguides L1 and L2. In the intercept b2 of the linear function F3, the total value of the pulse shift amounts of the two couplers C and the pulse shift amounts of the two splitters S (the splitter S1 and the splitter S2) appears.

In step ST8, for example, the evaluation unit 9 calculates the pulse shift amount of the splitter S based on the linear function F2. For example, the evaluation unit 9 defines the difference between the pulse shift amount P_{L3} corresponding to the waveguide L3 connected to the three splitters S and the pulse shift amount of the waveguide L3 derived from the linear function F3 as a pulse shift amount P_{S} of one splitter S (splitter S3).

Then, in step ST9, the evaluation unit 9 evaluates the splitter S based on the pulse shift amount P_{S}. The amount of chromatic dispersion D_{S} of the splitter S is calculated by Equation 8. ${D}_{S} = {P}_{S} / \left(WS\times {L}_{S}\right)$ (8)

Then, in step ST10, for example, the evaluation unit 9 calculates the pulse shift amount of the coupler C based on the linear function F3. The evaluation unit 9 calculates, as the pulse shift amount of the coupler C, the difference (b2 - 2P_{S}) between the intercept b2, which is the total value of the pulse shift amounts of the two couplers C and the pulse shift amounts of the two splitters S, and twice the pulse shift amount P_{S} of one splitter S. Then, in step ST11, for example, the evaluation unit 9 evaluates the coupler C based on the linear function F2. The amount of chromatic dispersion D_{C} of the coupler C is calculated by Equation 9. ${D}_{C} = \left(b2-2\times {P}_{S}\right) / \left(WS\times 2\times {L}_{C}\right)$ (9)

Then, in step ST12, for example, the evaluation unit 9 calculates the pulse shift amount of the structure U7 based on the linear function F3. For example, the evaluation unit 9 defines the difference between the pulse shift amount P_{L4} corresponding to the waveguide L4 connected to the three splitters S and the structure U7 and the pulse shift amount of the waveguide L4 derived from the linear function F3 as the total value K2 of the pulse shift amounts of one splitter S and the structure U6. The evaluation unit 9 calculates the difference between the total value K2 and the pulse shift amount P_{S} of one splitter S as the pulse shift amount of the structure U7. Then, in step ST13, for example, the evaluation unit 9 evaluates the structure U7 based on the linear function F3. The amount of chromatic dispersion DU7 of structure U7 is calculated by equation 10. In Equation 10, L_{U7} indicates the length of the structure U7. ${D}_{U 7} = \left(K2-{P}_{S}\right) / \left(WS\times {L}_{U 7}\right)$ (10)

In the disclosure described above, another structure may include at least one of the coupler C connected to the input end and the output end of each of the plurality of waveguides to input and output the pulse train Pb, the splitter S for splitting the pulse train Pb on the photonic integrated circuits 5E and 5F, and the ring resonator U4 for resonating and extracting a part of the light from the pulse train Pb. The other structure may include at least one of a converter, a phase modulator, a structure (for example, a phase modulator) that changes the width of a waveguide, a temperature-dependent structure, a current-dependent structure, a voltage-dependent structure, and a stress-dependent structure. In these cases, it is possible to easily evaluate structures necessary for appropriately transmitting the pulse train Pb.

### [Seventh embodiment of the inspection method]

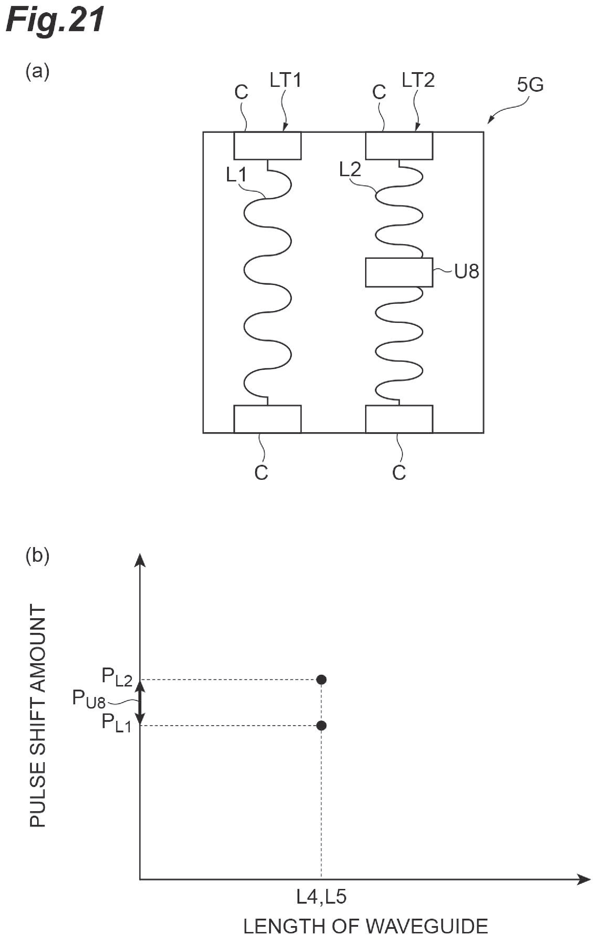

A plurality of waveguides may have the same length. FIG. 21(a) is a drawing schematically showing a photonic integrated circuit 5G according to a seventh embodiment. FIG. 21(b) is a drawing showing an example of a method for evaluating structures included in the photonic integrated circuit 5G. As shown in FIG. 21(a), the photonic integrated circuit 5G has two optical transmission paths LT1 and LT2. The optical transmission path LT1 includes a waveguide L1 and two couplers C. The optical transmission path LT2 includes a waveguide L2, two couplers C, and a structure U8. The length of the waveguide L2 is a length obtained by subtracting the length of the structure U8 from the length of the optical transmission path LT2. In the example shown in FIG. 21, the length of the waveguide L1 and the length of the waveguide L2 are the same.

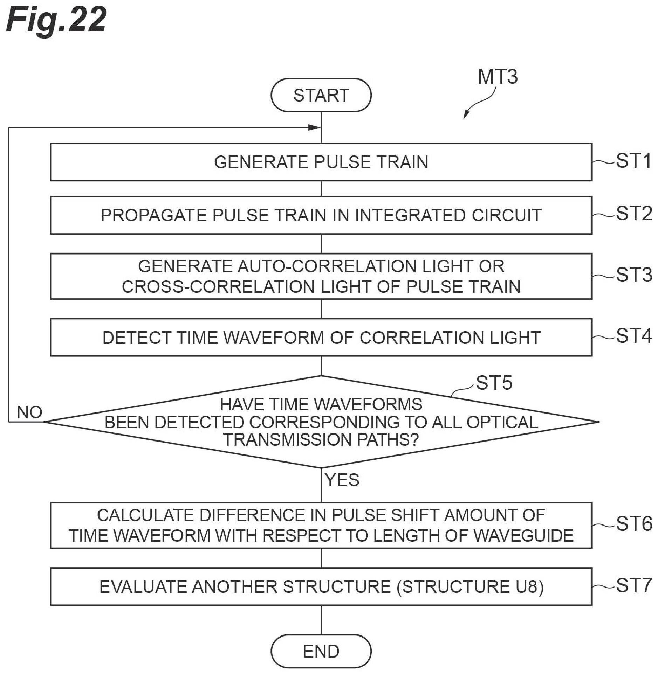

FIG. 22 is a flowchart of an inspection method MT3 for evaluating the photonic integrated circuit 5G. The inspection method MT3 is the same as the inspection method MT1 from step ST1 to step ST5. In step ST6, the evaluation unit 9 calculates a difference between a pulse shift amount P_{L1} corresponding to the waveguide L1 and a pulse shift amount P_{L2} corresponding to the waveguide L2. In the photonic integrated circuit 5G, since the lengths of the plurality of waveguides L1 and L2 are the same, the difference between the pulse shift amount P_{L1} and the pulse shift amount P_{L2} can be regarded as a pulse shift amount P_{U8} of the structure U8.

Then, in step ST7, the evaluation unit 9 evaluates the structure U8. The amount of chromatic dispersion D_{U8} of the structure U8 is calculated by Equation (11). In Equation 11, L_{U8} indicates the length of the structure U8. ${D}_{U 8} = \left({P}_{U 8}\right) / \left(WS\times {L}_{U 8}\right)$ (11)

In the seventh embodiment, since the lengths of the plurality of waveguides L1 and L2 are the same, the difference between the feature quantities of a plurality of time waveforms can become the feature quantities of the other structure U8. Therefore, it is possible to easily evaluate the structure U8.

In the inspection device according to one aspect of the present disclosure described above, it has been described that in step ST1, when the pulse forming unit 3 generates the pulse train Pb to be input to a plurality of optical transmission paths, a pulse train in which the wavelength differences between a plurality of optical pulses are equal is generated. However, the wavelength differences between the plurality of optical pulses may be different for each optical transmission path. For example, the wavelength difference of the pulse train Pb input to the optical transmission path LT2 may be twice the wavelength difference of the pulse train Pb input to the optical transmission path LT1. In this case, since the pulse shift amount also becomes twice, the ratio between the pulse shift amount and the wavelength difference does not change between the pulse train Pb input to the optical transmission path LT1 and the pulse train Pb input to the optical transmission path LT2. That is, the amount of chromatic dispersion described in Equations 1 to 11 does not change. However, when the wavelength differences between the plurality of optical pulses are different for each optical transmission path, the center wavelength of the pulse train Pb needs to be common. By making the center wavelength of the pulse train Pb common, it becomes unnecessary to correct the pulse shift amount for each optical transmission path. As a result, the complexity of calculations required for evaluating the structure can be avoided.

The inspection device and the inspection method of the present disclosure are not limited to the above-described embodiments and configuration examples, and various modifications are possible. For example, in the above embodiments, the feature quantities of the time waveform of the pulse train Pb are calculated using the correlation optical system 7; however, the feature quantities of the time waveform of the pulse train Pb may be calculated using a pulse shift method, a phase modulation method, or spectral interference instead of the correlation optical system 7.

The pulse shift method is a method of directly measuring the group delay time for each wavelength of the two optical pulses Pb1 and Pb2 in the time domain. In the pulse shift method, for example, the optical pulses Pb1 and Pb2 having pulse widths on the order of ns are propagated through an optical fiber, and the group delay time of each optical pulse is measured. For this reason, the measurement is easy. However, in order to obtain a measurable delay time, it is necessary to propagate the optical pulses Pb1 and Pb2 through an optical fiber having a sufficiently large fiber length (for example, several kilometers).

The spectral interferometry is a method in which the two optical pulses Pb1 and Pb2 are used as sample pulse light, interference between the sample pulse light and reference pulse is observed in the spectral domain, and the feature quantity of the time waveform is estimated from changes in the spectral shape. For the optical system, for example, a Mach-Zehnder optical system is used. Since the spectral interferometry can accurately measure relatively small changes in dispersion, the spectral interferometry can be applied to dispersion measurement using a relatively short optical fiber. However, compared to the pulse shift method, a precise operation is required to align the timing (delay) between the interference pulses, and accordingly, highly sophisticated adjustment is required each time a sample to be observed changes.

### Reference Signs List

1: inspection device, 3: pulse forming unit, 5, 5A, 5B, 5C, 5D, 5E, 5F, 5G: photonic integrated circuit, 8: optical detection unit, 9: evaluation unit, 53, L1, L2, L3, L4: waveguide, a: slope, b, b1, b2: intercept, C, C1, C2: coupler, D: chromatic dispersion, F1, F2, F3: linear function, K1, P_{L1}, P_{L2}, P_{L3}, P_{L4}, P_{S}, P_{U1}, P_{U2}, P_{U3}, P_{U4}, P_{U5}, P_{U8}: pulse shift amount, Pc: correlation light, MT1, MT2, MT3: inspection method, Pb, Pba, Pbb: pulse train, Pb1, Pb2: optical pulse, S, S1, S2, S3: splitter, U1, U2, U3, U6, U7, U8: structure, U4: ring resonator.

## Claims

1. An inspection device for inspecting a photonic integrated circuit having an optical structure including a plurality of waveguides, the device comprising:
a pulse forming unit that generates a pulse train in which a plurality of optical pulses having different center wavelengths are arranged at predetermined time intervals;
an optical detection unit that detects a time waveform of the pulse train output from the photonic integrated circuit; and
an evaluation unit that evaluates the photonic integrated circuit based on a feature quantity of the time waveform,
wherein the evaluation unit calculates, based on the feature quantity of the time waveform corresponding to each of the plurality of waveguides having different known lengths, an amount of change in the feature quantity of the time waveform with respect to the length of the waveguide, and calculates a feature quantity of a time waveform of another structure based on the amount of change.

2. The inspection device according to claim 1,
wherein the pulse forming unit generates a pulse train in which wavelength differences between the plurality of optical pulses are equal.

3. The inspection device according to claim 1 or 2,
wherein the feature quantity of the time waveform is a pulse shift amount on a time axis between the plurality of optical pulses included in the pulse train.

4. The inspection device according to claim 3,
wherein the evaluation unit derives a linear function showing a relationship between a pulse shift amount corresponding to each of the plurality of waveguides and the length of each of the plurality of waveguides, and evaluates the plurality of waveguides based on a slope of the linear function.

5. The inspection device according to claim 3,
wherein the evaluation unit derives a linear function showing a relationship between a pulse shift amount corresponding to each of the plurality of waveguides and the length of each of the plurality of waveguides, and evaluates the other structure based on an intercept of the linear function.

6. The inspection device according to claim 4 or 5,
wherein the evaluation unit evaluates the other structure based on a difference between a pulse shift amount corresponding to a waveguide connected to the other structure and a pulse shift amount of the waveguide derived from the linear function.

7. The inspection device according to any one of claims 1 to 6,
wherein the evaluation unit evaluates chromatic dispersion of the photonic integrated circuit.

8. The inspection device according to any one of claims 1 to 7,
wherein the other structure includes at least one of a coupler connected to an input end and an output end of each of the plurality of waveguides to input and output the pulse train, a splitter for splitting the pulse train on the photonic integrated circuit, and a ring resonator for resonating and extracting a part of light from the pulse train.

9. The inspection device according to any one of claims 1 to 8,
wherein the time waveform of the pulse train is a time waveform of correlation light including cross-correlation light or auto-correlation light of the pulse train.

10. An inspection device for inspecting a photonic integrated circuit having an optical structure including a plurality of waveguides, the device comprising:
a pulse forming unit that generates a pulse train in which a plurality of optical pulses having different center wavelengths are arranged at predetermined time intervals;
an optical detection unit that detects a time waveform of the pulse train output from the photonic integrated circuit; and
an evaluation unit that evaluates the photonic integrated circuit based on a feature quantity of the time waveform,
wherein the evaluation unit calculates a feature quantity of a time waveform of another structure based on a difference in the feature quantity of the time waveform corresponding to each of the plurality of waveguides having the same known length.

11. An inspection method for inspecting a photonic integrated circuit having an optical structure including a plurality of waveguides, the method comprising:
a pulse forming step for generating a pulse train in which a plurality of optical pulses having different center wavelengths are arranged at predetermined time intervals;
an optical detection step for detecting a time waveform of the pulse train output from the photonic integrated circuit; and
an evaluation step for evaluating the photonic integrated circuit based on a feature quantity of the time waveform,
wherein in the evaluation step, based on the feature quantity of the time waveform corresponding to each of the plurality of waveguides having different known lengths, an amount of change in the feature quantity of the time waveform with respect to the length of the waveguide is calculated, and a feature quantity of a time waveform of another structure is calculated based on the amount of change.

12. The inspection method according to claim 11,
wherein in the pulse forming step, a pulse train in which wavelength differences between the plurality of optical pulses are equal is generated.

13. The inspection method according to claim 11 or 12,
wherein the feature quantity of the time waveform is a pulse shift amount on a time axis between the plurality of optical pulses included in the pulse train.

14. The inspection method according to claim 13,
wherein in the evaluation step, a linear function showing a relationship between a pulse shift amount corresponding to each of the plurality of waveguides and the length of each of the plurality of waveguides is derived, and the plurality of waveguides are evaluated based on a slope of the linear function.

15. The inspection method according to claim 13,
wherein in the evaluation step, a linear function showing a relationship between a pulse shift amount corresponding to each of the plurality of waveguides and the length of each of the plurality of waveguides is derived, and the other structure is evaluated based on an intercept of the linear function.

16. The inspection method according to claim 14 or 15,
wherein in the evaluation step, the other structure is evaluated based on a difference between a pulse shift amount corresponding to a waveguide connected to the other structure and a pulse shift amount of the waveguide derived from the linear function.

17. The inspection method according to any one of claims 11 to 16,
wherein in the evaluation step, chromatic dispersion of the photonic integrated circuit is evaluated.

18. The inspection method according to any one of claims 11 to 17,
wherein the other structure includes at least one of a coupler connected to an input end and an output end of each of the plurality of waveguides to input and output the pulse train, a splitter for splitting the pulse train on the photonic integrated circuit, and a ring resonator for resonating and extracting a part of light from the pulse train.

19. The inspection method according to any one of claims 11 to 18,
wherein the time waveform of the pulse train is a time waveform of correlation light including cross-correlation light or auto-correlation light of the pulse train.

20. An inspection method for inspecting a photonic integrated circuit having an optical structure including a plurality of waveguides, the method comprising:
a pulse forming step for generating a pulse train in which a plurality of optical pulses having different center wavelengths are arranged at predetermined time intervals;
an optical detection step for detecting a time waveform of the pulse train output from the photonic integrated circuit; and
an evaluation step for evaluating the photonic integrated circuit based on a feature quantity of the time waveform,
wherein in the evaluation step, a feature quantity of a time waveform of another structure is calculated based on a difference in the feature quantity of the time waveform corresponding to each of the plurality of waveguides having the same known length.
